(19) Europäisches Patentamt

European Patent Office

Office européen des brevets

(11) **EP 4 570 925 A1**

(12) **EUROPEAN PATENT APPLICATION**

(43) Date of publication:
 **18.06.2025 Bulletin 2025/25**

(21) Application number: **24219168.2**

(22) Date of filing: **11.12.2024**

(51) International Patent Classification (IPC):
 **C21C 7/00** (2006.01)     **C21C 7/072** (2006.01)
 **C21C 7/10** (2006.01)

(52) Cooperative Patent Classification (CPC):
 **C21C 7/10; C21C 7/0006; C21C 7/0075;**
 **C21C 7/072;** C21C 2300/06

(84) Designated Contracting States:
 **AL AT BE BG CH CY CZ DE DK EE ES FI FR GB**
 **GR HR HU IE IS IT LI LT LU LV MC ME MK MT NL**
 **NO PL PT RO RS SE SI SK SM TR**
 Designated Extension States:
 **BA**
 Designated Validation States:
 **GE KH MA MD TN**

(30) Priority: **14.12.2023 JP 2023211394**

(71) Applicants:
 • **Japan Steel Works M&E, Inc.**
  **Muroran-shi, Hokkaido 051-8505 (JP)**
 • **Muroran Institute of Technology**
  **Muroran-shi**
  **Hokkaido 050-8585 (JP)**

(72) Inventors:
 • **TAKAHASHI, Kazuki**
  **Muroran-shi, Hokkaido, 0518505 (JP)**
 • **SOWA, Takashi**
  **Muroran-shi, Hokkaido, 0518505 (JP)**
 • **WATANABE, Shinya**
  **Muroran-shi, Hokkaido, 0508585 (JP)**
 • **SAKAKI, Toru**
  **Muroran-shi, Hokkaido, 0508585 (JP)**

(74) Representative: **Simmons & Simmons LLP**
 **(Munich)**
 **Lehel Carré**
 **Gewürzmühlstraße 11**
 **80538 Munich (DE)**

(54) **PROGRAM, INFORMATION PROCESSING APPARATUS, AND INFORMATION PROCESSING METHOD FOR CONTROLLING A STEEL REFINING OPERATION**

(57) Provided are a program, an information processing apparatus, and an information processing method capable of suppressing a variation in operation for every operator. A computer (information processing apparatus) executes first calculation related to an oxygen heat-up operation for raising a molten steel temperature at the initial stage of refining, second calculation related to a slag-making agent adding operation, third calculation related to a component fluctuation of molten steel due to a vacuum degassing process, fourth calculation related to addition of ferroalloys, fifth calculation related to addition of scraps, sixth calculation related to energization heat-up for supplementing lowering of the molten steel temperature due to addition of ferroalloys and scraps, seventh calculation related to the molten steel temperature that lowers in a vacuum degassing process, and eighth calculation related to energization heat-up for supplementing lowering of the molten steel temperature due to the vacuum degassing process.

FIG.4

EP 4 570 925 A1

**Description**

FIELD

The present invention relates to a program, an information processing apparatus, and an information processing method relating to scheduling of a molten steel refining process.

BACKGROUND

In the molten steel refining process, molten steel melted by a revolving furnace, an electric furnace, or the like is tapped into a ladle, and oxygen in the molten steel is reduced by performing addition of a slag-making agent, deoxidation of slag, vacuum degassing, and the like. In combination with this, the weight and components of the molten steel are adjusted by adding scraps and ferroalloys when the amount of molten steel is insufficient. In addition, with regard to a molten steel temperature, management of the molten steel temperature is performed by an operation called oxygen heat-up and energization heat-up not only to maintain a satisfactory temperature until the refining process is terminated after the molten steel is tapped into the ladle, but also to adjust the temperature to a temperature required for a pouring process that is performed after the refining process.

Accordingly, the refining process is a complicated operation of adjusting three items including the weight, chemical components, and temperature management of the molten steel in parallel.

Therefore, for example, Japanese Patent Laid-Open Publication No. 07-316628 discloses a component adjustment method in which molten steel components after putting a determined alloy putting amount is predicted by using an estimated slag component, and component adjustment is performed on the basis of an alloy putting amount when a predicted molten steel component has reached a target component value.

In addition, Japanese Patent Laid-Open Publication No. 09-078122 discloses a molten steel temperature management method in which a temperature after vacuum degassing is predicted from a molten steel temperature and a molten steel weight before the vacuum degassing, a refractory temperature, and processing time by performing a calculation by using a predetermined calculation formula.

SUMMARY

However, the publications are not related to the method of managing all three items including the weight, chemical components, and temperature management of the molten steel, and in an actual operation, it is considered that a variation in operation may occur depending on the level of skill of operators and the like, and stable quality securement may be obstructed.

On the other hand, it is necessary to support the operation throughout the entire refining process to suppress the variation in operation, but Japanese Patent Laid-Open Publication No. 07-316628 is limited to the component adjustment method, and Japanese Patent Laid-Open Publication No. 09-078122 is limited to the temperature management of the molten steel. Therefore, there is a possibility that the problems may not be solved completely.

The present disclosure has been made in consideration of such circumstances, and an object thereof is to provide a program, an information processing apparatus, and an information processing method capable of suppressing a variation in operation for every operator in a refining process, and specifically, to support three items including the weight, chemical components, and temperature management of the molten steel.

A program according to the present disclosure causes a computer to carry out processing of executing calculations related to each operation in a refining process to obtain time required for an oxygen heat-up operation, a slag-making agent adding operation, a scrap adding operation, a ferroalloy adding operation, a vacuum degassing process operation, and an energization heat-up operation, and performing scheduling of the entirety of a refining process by obtaining an addition weight of the scraps, and a kind, an addition weight, and the number of times of addition of the ferroalloys to be added.

According to the present disclosure, it is possible to support operations of operators in all process steps of a refining process, and it is possible to suppress a variation in operation for every operator.

BRIEF DESCRIPTION OF THE DRAWINGS

FIG. 1 is a view illustrating an outline of a refining operation that supports on-site operators in an embodiment;
FIG. 2 is a table summarizing effects of each operation on the weight, chemical components, and a temperature of molten steel;

FIG. 3 is a table of summarizing required time, operation contents, a weight variation of molten steel, and a temperature variation of molten steel in correspondence with a flow of a refining operation to show an example of a schedule for an operator;

FIG. 4 is a functional block diagram illustrating a configuration example of an information processing apparatus according to this embodiment;

FIG. 5 is a table illustrating an example of conditions of each operation as input data necessary for a calculation;

FIG. 6 is a table illustrating an example of a target component range of molten steel;

FIG. 7 is a table illustrating an example of a component table of additives in a refining process;

FIG. 8 is a table illustrating an example of a record layout of a learning model management DB;

FIG. 9 is a table illustrating an example of a record layout of a component training data of training data DB;

FIG. 10 is a table illustrating an example of actual measured values of the amount of fluctuation of components after a vacuum degassing process for every object component which is outputted from a component fluctuation prediction model;

FIG. 11 is a table illustrating an example of a record layout of heat-up training data of the training data DB;

FIG. 12 is a table illustrating an example of a record layout of temperature training data of the training data DB;

FIG. 13 is a flowchart illustrating a procedure of a process of creating a component fluctuation prediction model;

FIG. 14 is a flowchart illustrating a procedure of a process of creating an energization heat-raising prediction model;

FIG. 15 is a flowchart illustrating a procedure of a process of creating a temperature-lowering prediction model;

FIG. 16 is a flowchart illustrating scheduling processing (from a first calculation to an eighth calculation);

FIG. 17 is a table illustrating an example of an actual measured value of object component measured value of molten steel at the initial stage of the refining process;

FIG. 18 is a flowchart of performing a fourth calculation/calculation related to addition of ferroalloys;

FIG. 19 is a table illustrating addition of ferroalloys in this embodiment for each of Group 1 to Group 3;

FIG. 20 is a flowchart of performing a fifth calculation/calculation related to addition of scraps;

FIG. 21 is a table in which a situation of a weight variation due to addition of ferroalloys is added to the table in FIG. 3 as a part of scheduling calculation performed by an information processing apparatus of this embodiment;

FIG. 22 is a flowchart of performing a sixth calculation/calculation related to lowering of a molten steel temperature in accordance with addition of ferroalloys and scraps;

FIG. 23 is a table in which results of the sixth calculation are added to the table in FIG. 21 as a part of a scheduling calculation performed by the information processing apparatus of this embodiment; and

FIG. 24 is a table in which results of the seventh calculation and the eight calculation are added to the table in FIG. 23 as a part of the scheduling calculation performed by the information processing apparatus of this embodiment.

DETAILED DESCRIPTION OF NON-LIMITING EXAMPLE EMBODIMENTS

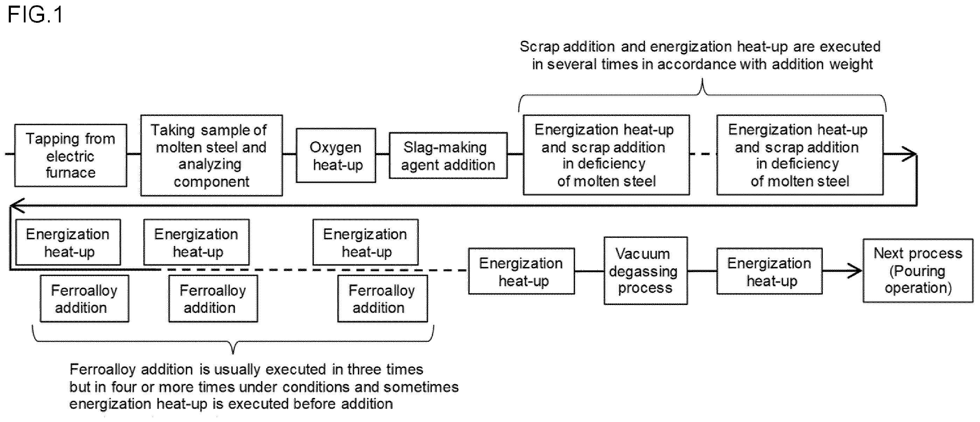

Hereinafter, description will be given of a program, an information processing apparatus, and an information processing method according to an embodiment of the invention. First, an outline of a refining process operation that is actually performed will be described with reference to FIG. 1.

Typically, in a process of manufacturing iron steel, molten steel melted in a revolving furnace or an electric furnace is tapped into a ladle, and is transferred to a ladle refining furnace where a refining process is performed. A first operation is to take a sample of the molten steel, and component analysis is performed by the operation to confirm initial components. A molten steel temperature immediately after the tapping is lowered as compared with an electric furnace process, and an operation called oxygen heat-up may be performed to raise the molten steel temperature in a short time. The oxygen heat-up is an operation of supplying oxygen to molten steel while adding Al or Si. This operation is an operation of raising the molten steel temperature in a relatively short time by using heat generation when the added Al or Si is oxidized. Time required for this operation is set to 10 minutes in this embodiment, and temperature rising caused by the operation is calculated in a first calculation.

Then, a slag layer is provided on the molten steel by adding and dissolving a slag-making agent. In this embodiment, since this operation is constant at two minutes for every time, and the weight and temperature of the molten steel do not vary, there is no particular calculation to be performed. However, in scheduling for organizing the entirety of the refining process, two minutes is used as an operation time, and thus this calculation is referred to as a second calculation for convenience. Note that, the slag layer provided on the molten steel becomes an electrical resistance source during energization heat-up to be described later, and Joule heat is generated due to energization and the Joule heat is used to raise a temperature of the molten steel. Furthermore, the molten steel is stirred by blowing an Ar gas from the bottom of the ladle, and a contact surface with the slag layer captures mainly oxides contained in the molten steel, thereby contributing to reduction of impurities in the molten steel, and a chemical reaction with the molten steel has an effect of reducing sulfur (S) contained in the molten steel.

Addition of the slag-making agent is terminated and the slag layer is formed on the molten steel, a full-scale refining operation is started, but first, the weight and chemical components of the molten steel are checked. Typically, the initial weight of the molten steel is measured when being tapped from the electric furnace by a load cell installed in a crane that suspends the ladle or a cart carrying the ladle, or the like. In addition, the initial components are checked immediately after the tapping as described above.

The initial weight of the molten steel is compared with a target weight, and in a case where the initial weight is larger than the target weight, the required weight is secured and no scrap is added. However, in a case where the initial weight is smaller than the target weight, an increase in weight due to addition of ferroalloys in the subsequent process is taken into account before comparison with the target weight. In addition, a calculation for calculating ferroalloys to be added takes into account a fluctuation in components due to the vacuum degassing process, and thus calculation accuracy of ferroalloys to be added is improved. The addition weights of ferroalloys and scraps are calculated in this manner, but a maximum weight that can be added at one time is limited to 4000 kg to prevent temperature lowering of the molten steel due to excessive addition and a non-melted residue of an added material. In accordance with the limitation, in this embodiment, in a case where a material to be added exceeds 4000 kg, the material is added in a plurality of times. A calculation related to the addition weight and the number of times of addition with respect to scraps and ferroalloys is performed by a calculation related to a component fluctuation of the molten steel due to the vacuum degassing process/third calculation, a calculation related to the weight and the number of times of addition of ferroalloys to be added/fourth calculation, and a calculation related to addition of scraps/fifth calculation.

When ferroalloys and scraps for which the weight and the number times of addition are calculated are added, the molten steel temperature lowers every time, but in order to avoid solidification of the molten steel even when the molten steel temperature lowers, specifically, so as not to be lower than an allowable lowest temperature of 1540°C, it is necessary to raise the molten steel temperature by performing energization heat-up in advance. For this, it is necessary to calculate a target temperature during energization heat-up, and it is also necessary to calculate time required for heat-up to a calculated target temperature, and these calculations constitute sixth calculation related to energization heat-up of the molten steel.

The ferroalloys and the scraps are added while maintaining the molten steel temperature by energization heat-up to adjust the weight and the chemical components of the molten steel, but when the operation is terminated, the vacuum degassing process is subsequently performed, and a process of reducing gas components such as oxygen and hydrogen contained in the molten steel is performed. This process is performed by exposing the ladle to a reduced pressure atmosphere, and since energization heat-up cannot be performed during the process, the molten steel temperature lowers. A calculation of temperature lowering of the molten steel is a seventh calculation.

Since the molten steel temperature lowers after the vacuum degassing process, the energization heat-up is performed again to raise the molten steel temperature to a refining termination temperature, and a calculation of time required for the heat-raising is an eighth calculation.

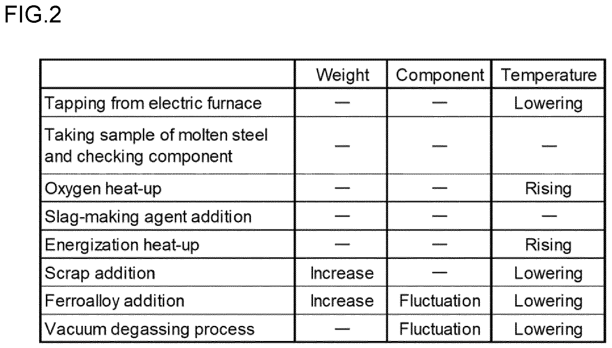

Respective operations of the refining process are performed in this manner, and it is possible to support operators by calculating time necessary for each operation, and the weight and the number of times of addition of ferroalloys and scraps to be further added. An object of this embodiment is to support operators by calculating details of the operation contents. Although some values are always constant such as the second calculation, that is, slag-making agent addition time, variations in the weight, the components, and the temperature of the molten steel due to each operation are summarized as in FIG. 2.

The weight of the molten steel starts from an initial weight, is necessary to finally exceed a required weight, and increases due to addition of ferroalloys and scraps. The chemical components of the molten steel start from initial components, and it is necessary to finally adjust all components within a target component range. Therefore, the adjustment is performed by addition of the ferroalloys, but some components are increased or decreased due to the vacuum degassing process. Therefore, the increase or decrease is necessary to be taken into account during addition. The molten steel temperature lowers from the point of time when being tapped into the ladle from the electric furnace, and lowers due to addition of scraps and addition of ferroalloys. In addition, although not shown in FIG. 2, the molten steel temperature also lowers when being left as is without being subjected to any operation. Therefore, the temperature is raised by oxygen heat-up and energization heat-up.

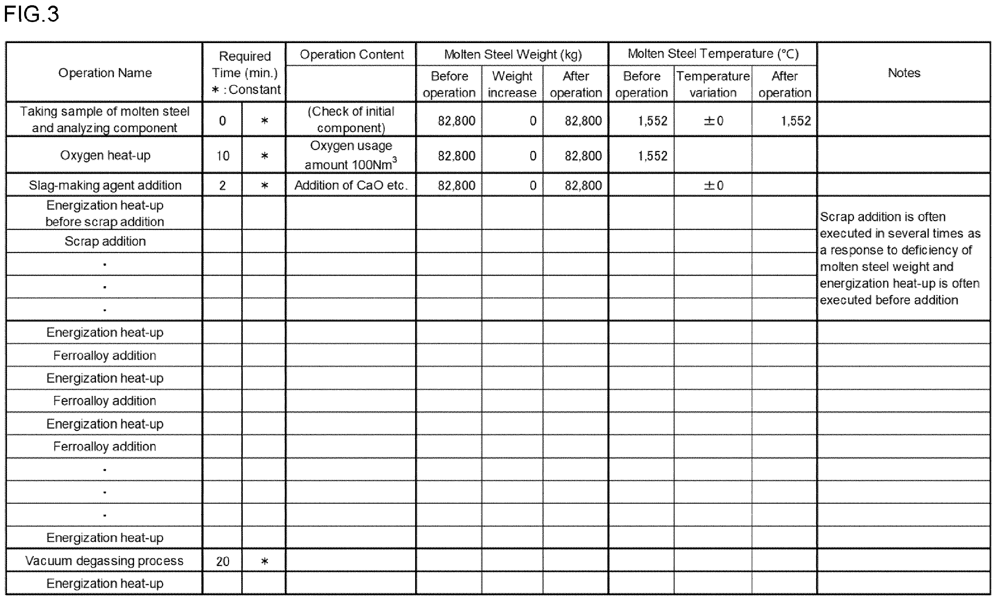

As described above, since addition of the scraps and addition of the ferroalloys have an effect on three items including the weight, the components, and the temperature, the additions become complicated operations, and an operation procedure of carrying out this embodiment is summarized as in FIG. 3, in other words, an object of this embodiment is to calculate empty columns in a table.

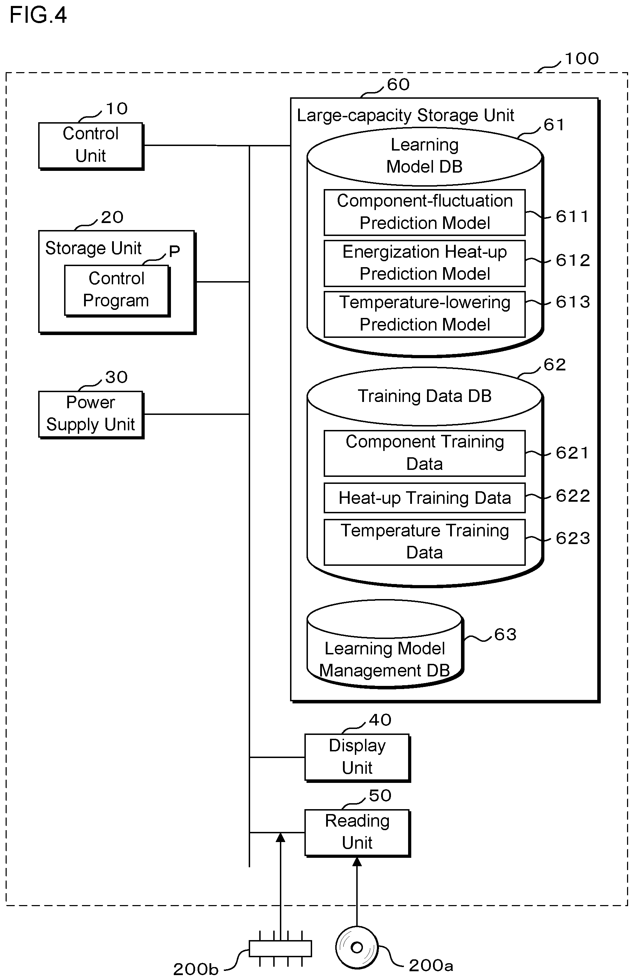

Next, a configuration and a function of the information processing apparatus necessary for performing various calculations will be described. FIG. 4 is a functional block diagram illustrating a configuration example of an information processing apparatus 100 according to this embodiment. The information processing apparatus 100 includes a control unit 10, a storage unit 20, a power supply unit 30, a display unit 40, a reading unit 50, and a large-capacity storage unit 60. Respective constituent elements are connected to each other via a bus.

The control unit 10 includes an arithmetic operation device such as a CPU, a micro-processing unit (MPU) and a graphics processing unit (GPU), reads and executes a control program P stored in the storage unit 20 to perform various kinds of information processing, control processing, and the like related to the information processing apparatus 100. Note that, the control program P is disposed on a single computer or one site, or is dispersed over a plurality of sites and can be developed to be executed on a plurality of computers connected to each other by a communication network. Note that, in this embodiment, description will be given on the assumption that the control unit 10 is a single processor, but the control unit 10 may be a multiprocessor.

The storage unit 20 includes a memory element such as a random access memory (RAM) and a read only memory (ROM), and stores the control program P, data, or the like necessary for the control unit 10 to execute processing. In addition, the storage unit 20 temporarily stores data necessary for the control unit 10 to execute an arithmetic operation, and the like.

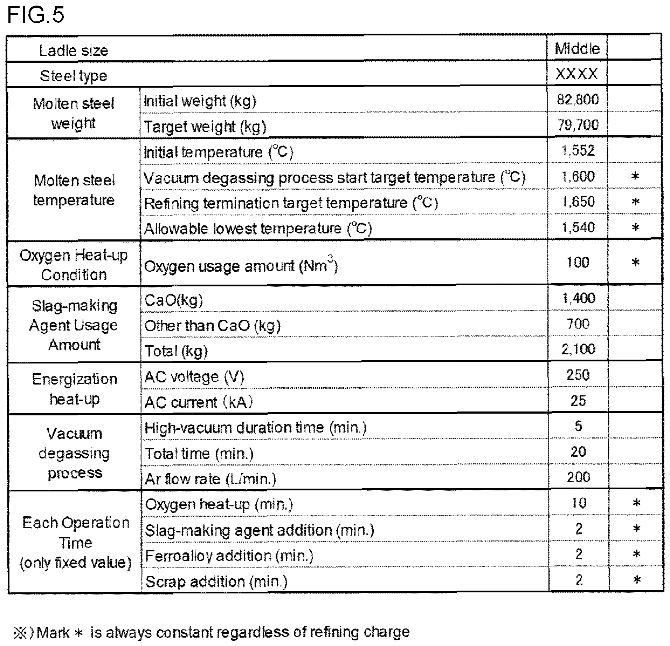

Furthermore, various pieces of information necessary for calculation are stored in the storage unit 20. The storage unit 20 stores various pieces of information necessary for the first calculation to the eighth calculation, but basic information that needs to be inputted for every refining charge is shown in FIG. 5.

There are three types of ladle sizes, and one is selected from "large, medium, and small" in correspondence with the molten steel weight. Steel type is a symbol indicating a steel type to be refined. There are two types of weights of molten steel, an initial weight is an actual amount of molten steel when refining is initiated, and a target weight is the amount of molten steel required when refining is terminated. In this embodiment, since the initial weight is larger than the target weight, there is no problem, but in a case where the initial weight is smaller than the target weight, an increase in weight due to addition of ferroalloys to be described later is calculated, and in a case where the initial weight is further smaller than the target weight, addition of scraps is performed to secure the weight of the molten steel equal to or larger than the target weight.

There are four types of molten steel temperatures, and an initial temperature is a temperature when refining is initiated, and is 1552°C that is an actual measured value in a case of this embodiment. A vacuum degassing process start target temperature of 1600°C is given in order to raise a temperature before the start of the process because the temperature of the molten steel during the vacuum degassing process lowers. A refining termination target temperature of 1650°C is a temperature required at the end of the refining process, and is a molten steel temperature required mainly for quality securement or the like when performing the subsequent pouring process. An allowable lowest temperature is set in order to avoid solidification of the molten steel, and the molten steel temperature must not fall below this temperature even after addition of ferroalloys and scraps. Therefore, in a case where it is expected that a temperature falls below the allowable lowest temperature after addition of the ferroalloys and the scraps, it is required to perform energization heat-up in advance.

In a case of oxygen heat-up, there are two cases including a case where Si is added to Si-deoxidized steel for oxidation, and a case where Al is added to Al-deoxidized steel for oxidation, but in any case, the amount of oxygen used is a constant value of 100 Nm$^3$. The weight of CaO that is the amount of slag-making agent used, weights of components other than CaO, and a total weight thereof are set to values obtained in advance in correspondence with an initial amount of the molten steel. In energization heat-up, since a plurality of energization facilities corresponding to ladle sizes are present, values of an AC voltage and an AC current of an energization facility used are given. The vacuum degassing process is a process of reducing gas components in the molten steel by exposing the molten steel to a reduced pressure environment, a high-vacuum duration time represents time for which the molten steel is exposed to an atmosphere equal to or lower than a predetermined pressure, and total time represents total time from initiation of the vacuum degassing process to termination thereof. In addition, during the vacuum degassing process, an Ar gas is blown from the bottom of the ladle to decrease gas components in the molten steel, and a flow rate of the Ar gas is given as one of processing conditions. In addition, there are some operations for which operation time is set constant for each time, for example, 10 minutes for oxygen heat-up, and two minutes for addition of the slag-making agent, addition of the ferroalloys, and addition of the scraps.

Values shown in FIG. 5 are stored in the storage unit 20, and are used in the first calculation to the eighth calculation to be described later.

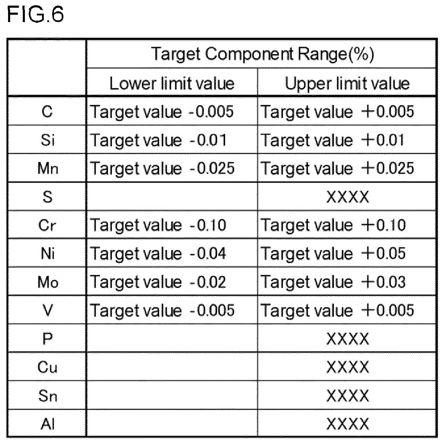

In addition, target ranges of chemical components are also stored in the storage unit 20, and an example thereof is shown in FIG. 6. In this embodiment, there are components such as C, Si, Mn, Cr, Ni, Mo, and V for which both an upper limit value and a lower limit value are determined, and other components such as S for which only an upper limit value is determined, and target ranges of the chemical components are given for every steel type.

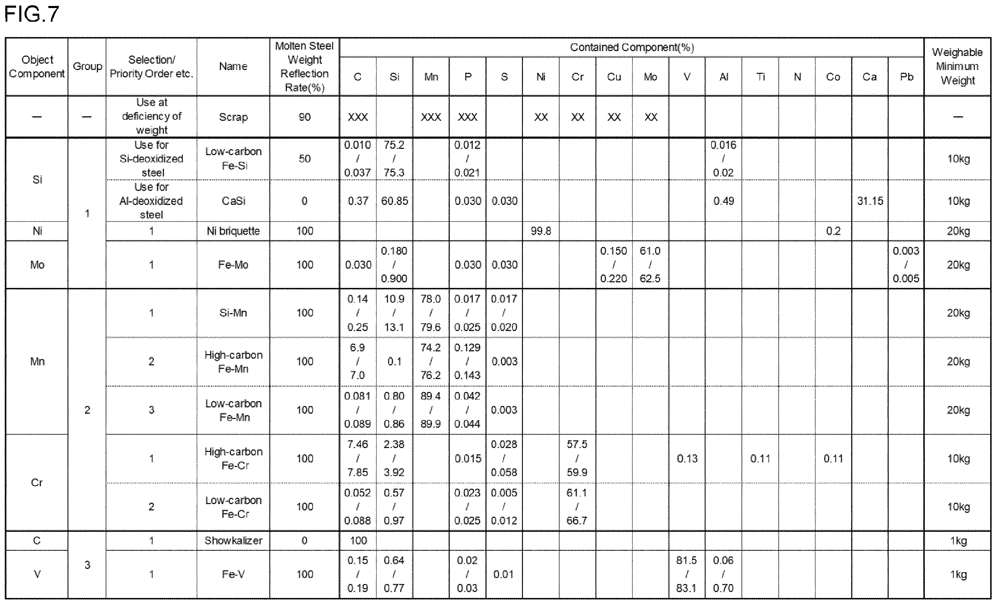

In addition, with regard to ferroalloys which are added so that the chemical components of the molten steel are within target ranges, and scraps which are added when the molten steel weight is deficient, necessary information is stored in the storage unit 20, and an example thereof is shown in FIG. 7.

FIG. 7 is a table illustrating an example of a component table of additives which are added to the molten steel in the refining process. Examples of the additives include ferroalloys employed for chemical component adjustment other than scraps, and the ferroalloys are further divided into Group 1 to Group 3. Group 1 is for addition of Si, Ni, and Mo, Group 2 is for addition of Mn and Cr, and Group 3 is for addition of C and V Addition of the groups is performed in the order of Group 1, Group 2, and Group 3. In addition, for example, in a case of increasing the amount of Si in the molten steel, there are two types of ferroalloys including a low-carbon Fe-Si and CaSi in correspondence with as to whether the ferroalloys are Si-deoxidized steel or Al-deoxidized steel. Similarly, in a case of increasing the amounts of Mn and Cr, there is "selection/priority order" that determines which ferroalloy is to be used preferentially. The selection/priority order is determined in correspondence with the amount of impurity elements contained other than Mn and Cr, and in a case of increasing the amount of Mn, addition weights are calculated in the order of priority: first rank/Si-Mn, second rank/high-carbon Fe-Mn, and third rank/low-carbon Fe-Mn. At this time, for example, in a case of increasing Mn in the molten steel, respective addition weights are calculated by considering that addition of Si-Mn (priority: first rank) is to be accompanied with an increase of Si contained therein in an amount of 10.9% to 13.1%, and addition of high-carbon Fe-Mn (priority: second rank) is to be accompanied with an increase in C contained therein in an amount of 6.9% to 7.0%. Similarly, in a case of increasing the amount of Cr, an addition weight is calculated in the order of the priority: first rank/high-carbon Fe-Cr, and second rank/low-carbon Fe-Cr, and the addition weight is calculated by considering that addition of the high-carbon Fe-Cr (priority: first rank) is to be accompanied with an increase of C contained therein in an amount of 7.46% to 7.85%, and an increase of Si contained therein in an amount of 2.38% to 3.92%.

Values of 0% to 100% are set to respective additives as "molten steel weight reflection rate" in the component table. These values indicate the degree of effect on an increase in weight of the molten steel when being actually added, and for example, CaSi and Shocaraiser which are set to 0% represent that an increase in molten steel weight is 0 kg regardless of the addition weight. Similarly, low-carbon Fe-Si set to 50% represents that 50% of the addition weight leads to an increase in weight of the molten steel, and other additives of 100% represent that 100% of the addition weight leads to an increase in weight of the molten steel. The reason why the molten steel weight reflection rate is not 100% is due to oxygen contained in the molten steel, and since ferroalloys generate oxides and the oxides are absorbed into slag, it does not lead to an increase in weight of the molten steel and thus a value less than 100% is given based on an experimental rule. Scrap is set to 90%, but this is because scraps are maintained in a state of partially containing slag, and thus setting is made by regarding that a weight ratio of the slag is constant at 10%.

Note that, data shown in FIG. 7 is always a constant value regardless of the refining charge.

Returning to FIG. 4, the display unit 40 is a liquid crystal monitor, an organic electroluminescence (EL) display, or the like, and displays various pieces of information in response to an instruction given by the control unit 10. In addition, the display unit 40 may have a touch panel function and may be configured to accept a setting input from an operator.

The reading unit 50 reads a portable storage medium 200a including a compact disc (CD)-ROM or a digital versatile disc (DVD)-ROM. The control unit 10 may read the control program P from the portable storage medium 200a via the reading unit 50, and may store the control program P in the large-capacity storage unit 60. In addition, the control unit 10 may download the control program P from another computer via a network or the like, and may store the control program P in the large-capacity storage unit 60. In addition, the control unit 10 may read the control program P from a semiconductor memory 200b.

The large-capacity storage unit 60 includes, for example, a recording medium such as a hard disk drive (HDD) and a solid state drive (SSD). The large-capacity storage unit 60 includes a learning model database (DB) 61, a training data DB 62, and a learning model management DB 63.

The learning model DB 61 stores a component-fluctuation prediction model 611 (first learning model), an energization heat-up prediction model 612 (second learning model), and a temperature-lowering prediction model 613 (third learning model). In the following description, for convenience, the component-fluctuation prediction model 611, the energization heat-up prediction model 612, and the temperature-lowering prediction model 613 are collectively referred to as prediction models 611 to 613.

The component-fluctuation prediction model 611 is a model that predicts a component fluctuation of the molten steel which occurs before and after the vacuum degassing process, and is used in the fourth calculation for calculating the type, the weight, and the like of the ferroalloys to be added to the molten steel. The energization heat-up prediction model 612 is a model that predicts time required to raise the heat of the molten steel to a target temperature during energization heat-up, and is used in the sixth calculation and the eighth calculation. The temperature-lowering prediction model 613 is a model that predicts a molten steel temperature that lowers due to the vacuum degassing process, and is used in the seventh calculation.

The training data DB 62 stores training data for constructing the prediction models 611 to 613. Specifically, the training data DB 62 stores component training data 621 that is training data for the component-fluctuation prediction model 611, heat-up training data 622 that is training data for the energization heat-up prediction model 612, and temperature training data 623 that is training data for the temperature-lowering prediction model 613.

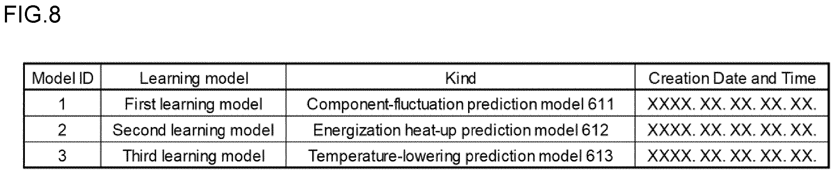

The learning model management DB 63 stores information related to the trained prediction models 611 to 613. Specifically, the learning model management DB 63 stores files of the trained prediction models 611 to 613, date and time information when the prediction models 611 to 613 were created, and the like, and an example thereof is shown in FIG. 8. The learning model management DB 63 includes a model ID column, a learning model column, a type column, and a creation date and time column. An ID for identifying each of the trained prediction models 611 to 613 is stored in the model ID column. The learning model column stores files of the trained prediction models 611 to 613. In addition, the type column stores the type of the learning models. For example, the type is classified by output data outputted from each of the prediction models 611 to 613. In addition, the creation date and time column stores date and time information when the prediction models 611 to 613 were created.

The prediction models 611 to 613 are trained learning models created by machine learning, and the learning models will be described sequentially.

The component-fluctuation prediction model 611 that is a first learning model is created on the basis of conditions of a previously performed vacuum degassing process, and an actual value of a component fluctuation amount (hereinafter, referred to as "component fluctuation amount") before and after the vacuum degassing process which has been obtained as an actual measured value at that time, and outputs a component fluctuation amount before and after the vacuum degassing process which is predicted under the charge conditions. The component-fluctuation prediction model 611 is configured by a neural network in which a plurality of neurons are connected. The component-fluctuation prediction model 611 includes an input layer, an intermediate layer, and an output layer, and is trained to output the amount of each component of the molten steel which fluctuates during the vacuum degassing (hereinafter, simply referred to as "component fluctuation amount after degassing") in a case where input data at the time of component fluctuation prediction such as a molten steel component at the initial stage of the refining process, vacuum degassing conditions, a molten steel weight at the initial stage of the refining process, the amount of the slag-making agent used is inputted. Here, the component fluctuation amount after degassing is a difference between the amount of the molten steel component after the vacuum degassing and the amount of the molten steel component before the vacuum degassing.

The type of the neural network that constitutes the component-fluctuation prediction model 611 may be random. For example, the component-fluctuation prediction model 611 uses an elastic net regression model. The elastic net regression is a type of regularized linear regression, and is created as a compromise between a well-known Ridge regression and Lasso regression to resolve an issue of a limited number of explanatory variables which can be included in a Lasso regression model.

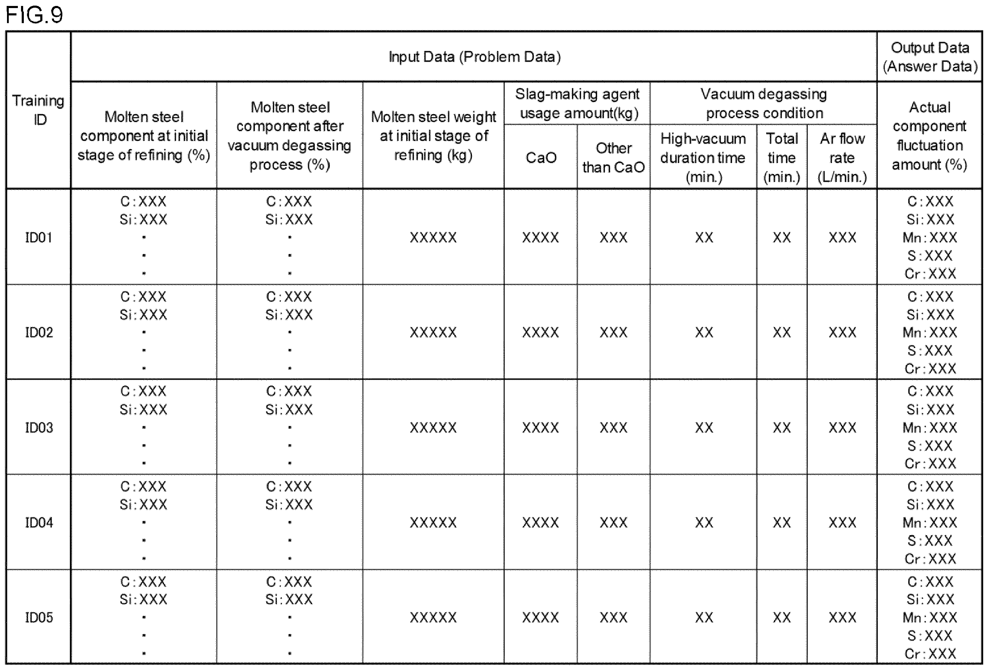

The training data DB 62 in FIG. 4 stores the component training data 621 for creating the component-fluctuation prediction model 611, and an example thereof is shown in FIG. 9. The component training data 621 includes a training ID column, an input data column, and an output data column. An ID for identifying each training data is stored in the training ID column, a molten steel component at the initial stage of the refining process, a molten steel component after the vacuum degassing process, a molten steel weight at the initial stage of the refining process, the amount of the slag-making agent (CaO, and the like) used, and a high-vacuum duration time, total time, and an Ar flow rate as vacuum degassing processing conditions, in the past refining charge, are stored in the input data column, and an actual component fluctuation amount that is actually measured after the vacuum degassing process performed under the above-described conditions is stored in the output data column.

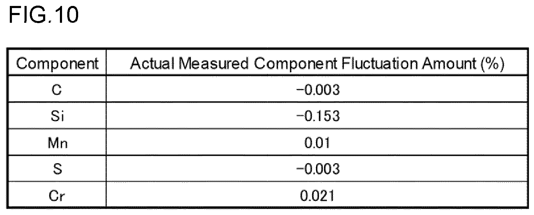

An example of calculation results employing the component-fluctuation prediction model 611 is shown in FIG. 10. In FIG. 10, C, Si, and S are shown as negative values, Mn and Cr are shown as positive values, and values (%) by which C, Si, and S contained in the molten steel decrease due to the vacuum degassing process and values (%) by which Mn and Cr contained in the molten steel increase due to the vacuum degassing process. The component fluctuation amount can be employed when calculating an addition weight of ferroalloys in the fourth calculation, and details thereof will be described later.

Returning to FIG. 4, the energization heat-up prediction model 612 that is a second learning model is created on the basis of actual measured data of temperature rising of the molten steel (hereinafter, referred to as "actual measured temperature rising value") during energization heat-up performed in the past, and the like, and outputs time required for energization heat-up and a rising temperature of the molten steel which are predicted under the charge conditions. The energization heat-up prediction model 612 is configured by a neural network in which a plurality of neurons are connected. The energization heat-up prediction model 612 includes an input layer, an intermediate layer, and an output layer, and calculates time required for energization heat-up and a rising temperature of the molten steel as an output in a case where a ladle size, a molten steel weight at the initial stage of the refining process, the amount of a slag-making agent used, the elapsed time from start of refining, a molten steel temperature after oxygen heat-up, energization conditions, input energy by energization, an actual measured molten steel temperature after energization are inputted.

The type of the neural network that constitutes the energization heat-up prediction model 612 may be random. In this embodiment, the energization heat-up prediction model 612 uses a random forest model, and the random forest is a method of supervised machine learning. The random forest is an ensemble learning method consisting of a large number of decision trees which are randomly created.

The energization heat-up operation is used not only before the vacuum degassing process but also after the vacuum degassing process, and the energization heat-up prediction model 612 is used in both the operations. In this embodiment, energization time is extended in a five minute pitch such as 5 minutes, 10 minutes, 15 minutes, ..., to improve arithmetic operation speed, and a molten steel temperature for each energization time is calculated. However, before the vacuum degassing process, the energization heat-up time and the molten steel temperature in a case of exceeding a target temperature for the first time are employed as a calculation result, but after the vacuum degassing process, an energization heat-up time and a molten steel temperature when the temperature becomes closest to the target temperature are used as the calculation result.

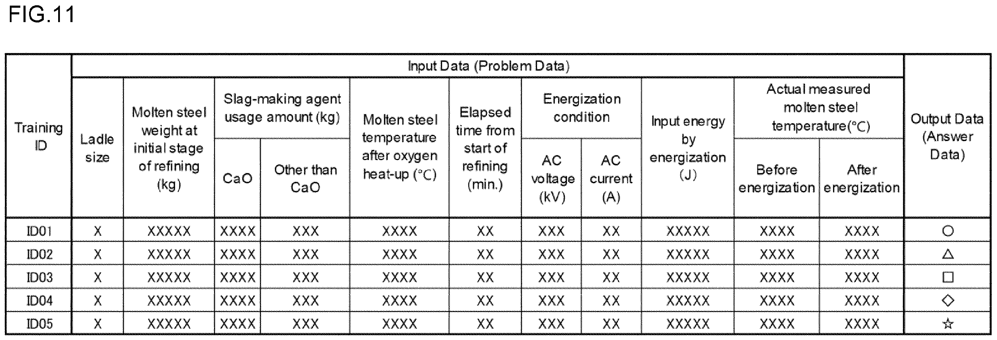

The heat-up training data 622 for creating the energization heat-up prediction model 612 is stored in the training data DB 62 in FIG. 4, and an example thereof is shown in FIG. 11. The heat-up training data 622 includes a training ID column, an input data column, and an output data column. An ID for identifying each training data is stored in the training ID column, and input data includes a ladle size, a molten steel weight at the initial stage of the refining process, the amount of the slag-making agent (CaO, and the like) used, time elapsed from the start of refining, a molten steel temperature after oxygen heat-up, energization conditions (AC voltage/AC current), input energy by energization, and a molten steel temperature before and after energization, in the past refining charge, is stored in the input data column. Here, the molten steel temperature after oxygen heat-up is a molten steel temperature value that is actually measured when performing an oxygen heat-up operation in the refining charge.

Returning to FIG. 4, the temperature-lowering prediction model 613 that is a third learning model is created on the basis of actual measured value data of a molten steel temperature lowered value during the past vacuum degassing process, and the like, and outputs the molten steel temperature lowered value at the vacuum degassing process which is predicted under the charge condition.

The temperature-lowering prediction model 613 is configured by a neural network in which a plurality of neurons are connected. The temperature-lowering prediction model 613 includes an input layer, an intermediate layer, and an output layer, and is trained to output a vacuum degassing termination temperature in a case where a ladle size, a molten steel weight and a molten steel temperature at the initial stage of refining, the amount of the slag-making agent (CaO, and the like) used, and a vacuum degassing start temperature are input.

The type of the neural network that constitutes the temperature-lowering prediction model 613 may be random. In this embodiment, the temperature-lowering prediction model 613 uses a random forest model as in the energization heat-up prediction model 612, and a total time of the vacuum degassing process is set to 20 minutes, and this value is constant in refining of another charge. Therefore, different from the energization heat-up, the vacuum degassing time is a constant value of 20 minutes, and temperature lowering prediction of the molten steel is made for this.

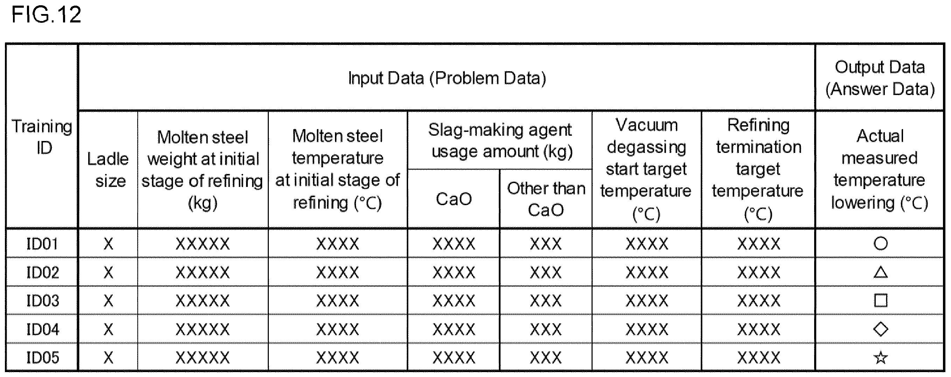

The temperature training data 623 for creating the temperature-lowering prediction model 613 is stored in the training data DB 62 in FIG. 4, and an example thereof is shown in FIG. 12. The temperature training data 623 includes an ID for identifying each training data, and temperature lowering data in the past refining charge. Specifically, a ladle size, a molten steel weight and a molten steel temperature at the initial stage of refining, the amount of slag-making agent (CaO and the like) used, a vacuum degassing start target temperature, and a refining termination target temperature are included as input data (problem data), and a vacuum degassing termination temperature is included as output data (answer data).

The ladle size is information representing the size of a ladle used in refining as described above, and in this embodiment, a case where the ladle size is stored in the input data column of the heat-up training data 622 and the temperature training data 623 is described as an example, but there is no limitation thereto. For example, as information regarding the ladle, detailed information such as physical properties of a refractory associated with a ladle management number, the number of times of usage or total usage time after the refractory has been re-lined, and a total weight of a processed molten steel is considered as a factor that has an effect on temperature rising of the molten steel, and thus the information may be contained in the input data of the heat-up training data 622 and the temperature training data 623.

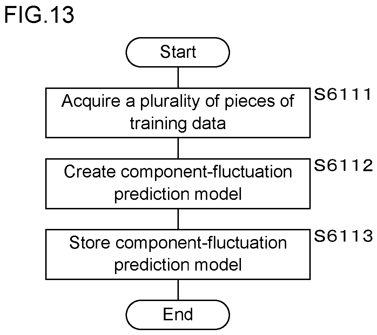

FIG. 13 is a flowchart illustrating a procedure of a process of creating the component-fluctuation prediction model 611. The control unit 10 acquires a plurality of pieces of input data (problem data) and answer data (actual component fluctuation amount) corresponding to the problem data from the component training data 621 of the training data DB 62 (refer to FIG. 9) (step S6111). The control unit 10 creates the component-fluctuation prediction model 611 in which a component fluctuation amount after degassing is set as an output by using the acquired problem data and the answer data corresponding to the problem data (step S6112).

The control unit 10 sequentially inputs the problem data to the component-fluctuation prediction model 611 and causes it to sequentially output the component fluctuation amount after degassing. The control unit 10 compares the outputted component fluctuation amount after degassing with the answer data (actual measured component fluctuation amount) included in the component training data 621, optimizes various parameters of the intermediate layer so that both the outputted component fluctuation amount and the answer data are approximate to each other, and creates the component-fluctuation prediction model 611.

Specifically, the elastic net regression model used by the component-fluctuation prediction model 611 obtains a regression coefficient, for example, by using the following formula (1). In Formula (1), a first term is an objective function of a normal linear regression and a second term is a term called regularization term for penalizing an increase in the regression coefficient.

$$argmin_\beta \left\| y_i - \beta_0 - \sum_{j=1}^{P} x_{ij}\beta_j \right\|_2^2 + \lambda \sum_{j=1}^{P} \left( \alpha|\beta_j| + (1-\alpha)\beta_j^2 \right) \ \dots (1)$$

$\beta$: regression coefficient
$\alpha$, $\lambda$: regularization parameter
x: explanatory variable
y: objective variable

First, in Formula (1), the regularization parameters $\alpha$ ($0 < \alpha < 1$) and $\lambda$ are searched. In search of the regularization parameters $\alpha$ and $\lambda$, K-fold cross validation is used. In addition, the model is evaluated by using mean squared error (MSE) to determine the regularization parameters $\alpha$ and $\lambda$. When the regularization parameters $\alpha$ and $\lambda$ are determined, a regression coefficient is obtained by using Formula (1) and the component training data 621 to create the component-fluctuation prediction model 611.

The control unit 10 stores the created component-fluctuation prediction model 611 in the learning model management DB 63 of the large-capacity storage unit 60 (step S6113), and terminates a series of processing. Specifically, the control unit 10 assigns a model ID to the created component-fluctuation prediction model 611, and stores files and creation date and time of the component-fluctuation prediction model 611 in the learning model management DB 63 as one record in association with the assigned model ID.

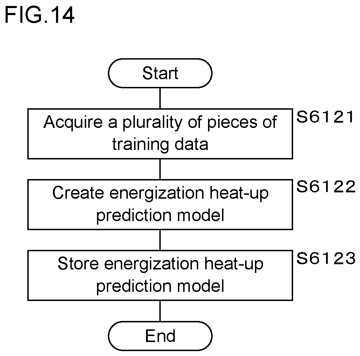

FIG. 14 is a flowchart illustrating a procedure of a process of creating the energization heat-up prediction model 612. The control unit 10 acquires a plurality of pieces of input data (problem data) and answer data (actual measured temperature rising value) corresponding to the problem data from the heat-up training data 622 of the training data DB 62 (refer to FIG. 11) (step S6121). The control unit 10 creates the energization heat-up prediction model 612 in which a rising temperature of the molten steel during energization heat-up is set as an output by using the acquired problem data and answer data (step S6122).

The control unit 10 sequentially inputs the problem issue data to the energization heat-up prediction model 612 and causes it to sequentially output the rising temperature of the molten steel. The control unit 10 compares the outputted rising temperature of the molten steel and the answer data (actual measured temperature rising value) included in the heat-up training data 622, optimizes various parameters of the intermediate layer so that the outputted rising temperature and the answer data are approximate to each other, and creates the energization heat-up prediction model 612.

Specifically, the control unit 10 creates a plurality of (M) sample sets by using the heat-up training data 622 by bootstrap sampling, and randomly extracts a plurality of feature amounts (explanatory variables) to be used in machine learning with respect to the sample sets. In addition, the control unit 10 creates M decision trees by using the M sample sets and the explanatory variables, and trains each decision tree by using the heat-up training data 622. According to this, the random forest model (energization heat-up prediction model 612) is created. Note that, when performing prediction by actually using the random forest model, results of respective decision trees are averaged (ensembled) to produce a final result.

The control unit 10 stores the created energization heat-up prediction model 612 in the learning model management DB 63 of the large-capacity storage unit 60 (step S6123), and terminates a series of processing. Specifically, the control unit 10 assigns a model ID to the created energization heat-up prediction model 612, and stores files and creation date and time of the energization heat-up prediction model 612 in the learning model management DB 63 as one record in association with the assigned model ID.

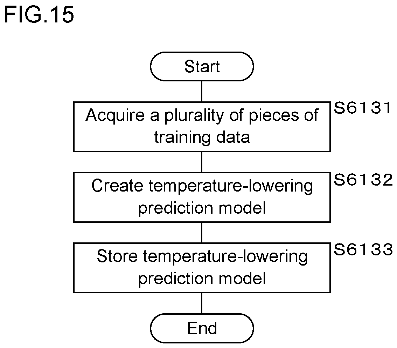

FIG. 15 is a flowchart illustrating a procedure of a process of creating the temperature-lowering prediction model 613. In a case where the temperature-lowering prediction model 613 uses a random forest model as in the energization heat-up prediction model 612, a procedure of a process of creating a model is similar as in the energization heat-up prediction model 612. The control unit 10 acquires a plurality of pieces of input data (problem data) in the above-described temperature-lowering prediction and answer data (actual measured temperature lowered value) corresponding to the problem data from the temperature training data 623 of the training data DB 62 (refer to FIG. 12) (step S6131). The control unit 10 creates the temperature-lowering prediction model 613 in which a molten steel temperature lowered value during vacuum degassing is set as an output by using the acquired input data at the time of predicting the temperature lowering, and the actual measured temperature lowered value (step S6132).

The control unit 10 sequentially inputs the input data at the time of predicting the temperature lowering to the temperature-lowering prediction model 613 and causes it to sequentially output the molten steel temperature lowered value. The control unit 10 compares the outputted molten steel temperature lowered value with the actual measured temperature lowered value that is training data included in the temperature training data 623, optimizes various parameters of the intermediate layer so that both the values are approximate to each other, and creates the temperature-lowering prediction model 613.

The control unit 10 stores the created temperature-lowering prediction model 613 in the learning model management DB 63 of the large-capacity storage unit 60 (step S6133), and terminates a series of processing. Specifically, the control unit 10 assigns a model ID to the created temperature-lowering prediction model 613, and stores files and creation date and time of the temperature-lowering prediction model 613 in the learning model management DB 63 as one record in association with the assigned model ID.

Note that, in this embodiment, the storage unit 20 and the large-capacity storage unit 60 may be configured as an integral storage device. In addition, the large-capacity storage unit 60 may be configured by a plurality of storage devices. In addition, the large-capacity storage unit 60 may be an external storage device connected to the information processing apparatus 100. Note that, the information processing apparatus 100 may be configured as a single computer, may be configured in a state of being distributed to a plurality of computers, or may be executed in a state of being distributed to virtual machines.

The information processing apparatus 100 having the above-described configuration according to this embodiment performs scheduling processing of a series of operations in the above-described refining process by using prediction results (output data) outputted from the prediction models 611 to 613.

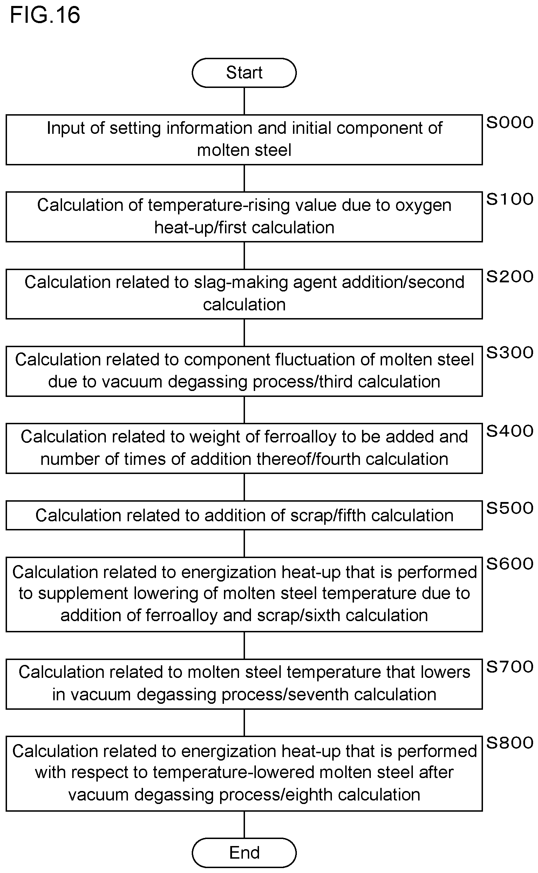

FIG. 16 is a flowchart illustrating scheduling processing in the information processing apparatus 100 according to this embodiment, and an example of the scheduling processing will be explained below.

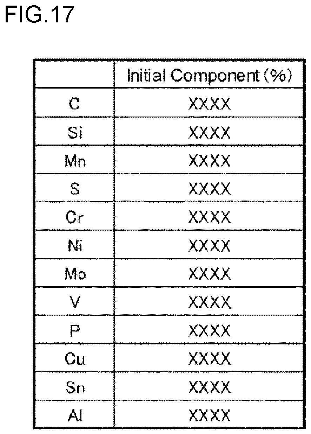

First, as setting information required for various calculations, the information shown in FIG. 5 and FIG. 6, and initial components obtained by collecting and analyzing a molten steel on-site are inputted (step S000). An example of the initial components is shown in FIG. 17, and the same components as the components for which target ranges are determined in FIG. 6 are analyzed.

Next, the following calculations are performed.

First calculation: calculation related to an oxygen heat-up operation (step S100).

Second calculation: calculation related to a slag-making agent adding operation (step S200).

Third calculation: calculation related to a component fluctuation of molten steel due to a vacuum degassing process (step S300).

Fourth calculation: calculation related to the weight of ferroalloys to be added and the number of times of addition thereof (step S400).

Fifth calculation: calculation related to addition of scraps (step S500).

Sixth calculation: calculation related to energization heat-up that is performed to supplement lowering of a molten steel temperature due to addition of ferroalloys and scraps (step S600).

Seventh calculation: calculation related to a molten steel temperature that lowers in the vacuum degassing process (step S700).

Eighth calculation: calculation related to energization heat-up that is performed with respect to the temperature-lowered molten steel after the vacuum degassing process (step S800).

The first calculation (S100) is a calculation related to oxygen heat-up. As described above, the refining operation initiates from tapping of the molten steel dissolved in an electric furnace process to a container called a ladle, and at this time, a heat quantity of the molten steel is taken away by the ladle, and thus the molten steel temperature lowers rapidly. An operation of supplementing the temperature lowering in a short time is the oxygen heat-up process. As a calculation flow, a temperature-rising value of the molten steel due to the oxygen heat-up process is calculated by using operation condition information acquired in S000. Hereinafter, a case where Si is added will be described as an example.

On the basis of past experience values, in a case where 1% by weight of Si relative to molten steel is oxidized, it is determined that in correspondence with the oxidation, the amount of oxygen required is 8.2 $Nm^3$/1000 kg, and a molten steel temperature that rises at this time is 20°C. On the other hand, as shown in FIG. 5, the amount of oxygen used in this embodiment is 100 $Nm^3$, and the weight of the molten steel is 82800 kg, and thus the amount of oxygen is 100 $Nm^3$/82800 kg by weight relative to the molten steel. Here, when the amount of Si corresponding to the amount of oxygen of 100 $Nm^3$/82800 kg is set as X (%), the following expression is established.

$$1 \ (\%) : 8.2 \ (Nm^3/1000 \ kg)$$

$$= X \ (\%) : 100 \ (Nm^3/82800 \ kg)$$

From the expression, X becomes 0.147 (%), and Si required to be added in a case of using 100 $Nm^3$ with respect to 82800 kg of molten steel is obtained as

$$82800 \ (kg) \times 0.147 \ (\%) \fallingdotseq 122 \ (kg)$$

In addition, temperature rising of the molten steel is calculated as,

$$\text{temperature rising of molten steel} = 20 \ (°C/Si: 1\%) \times 0.147 \ (Si: \%)$$

$$= 29.4 \ (°C)$$

A temperature rising value of the molten steel due to the oxygen heat-up process becomes 29.4°C, and will be assumed to be 29°C for convenience of explanation. As a result of the calculation, the molten steel temperature is 1552°C at the initial stage of refining, but the temperature rises by 29°C due to the oxygen heat-up operation and will be calculated as 1581°C. In addition, in this embodiment, time required for the oxygen heat-up operation is set to be constant at two minutes.

The second calculation (S200) is a calculation related to a slag-making agent adding operation. The slag-making agent includes two components of CaO as a main component and the other, and when the components are dissolved, a slag layer can be formed on the molten steel as described above, and becomes a heat source for Joule heat during energization heat-up. In reality, time required for the slag-making agent adding operation varies due to an addition weight, and temperature-lowering of the molten steel also varies. However, these effects are considered to be small, time required in this embodiment is set to be constant at two minutes, and the weight and the molten steel temperature are assumed not to vary, but for convenience, this calculation is referred to as "second calculation".

A next calculation is performed by imitating an actual operation on-site to determine whether or not to add scraps having the same component as a target component in deficiency by considering an initial amount of molten steel. Here, in the actual operation, it is necessary to determine whether or not addition of scraps is required in consideration of an increase in weight due to addition of ferroalloys performed in the subsequent process, and a determination as to whether or not the amount of molten steel is deficient is performed specifically on the basis of the following expression (S300).

Deficient amount of molten steel = target weight - (initial weight + addition weight of ferroalloys)

In the expression, when the "deficient amount of molten steel" becomes a positive number, this value is the addition weight of scraps, and when the "deficient amount of molten steel" becomes a negative number, addition of scraps is not necessary.

The addition weight of ferroalloys is calculated by considering a component fluctuation due to the vacuum degassing process. Therefore, as illustrated in FIG. 1, actual operations are performed in the order of addition of scraps, energization heat-up, addition of ferroalloys, energization heat-up, vacuum degassing process, ..., but in this embodiment, calculations are performed in the order of a calculation (third calculation) related to a component fluctuation of molten steel due to the vacuum degassing process, a calculation (fourth calculation) related to the weight of ferroalloys to be added and the number of times of addition thereof, a calculation (fifth calculation) related to addition of scraps, .... From these relationships, hereinafter, the third calculation/calculation related to the component fluctuation due to the vacuum degassing process and the fourth calculation/calculation related to a ferroalloy adding process will be described.

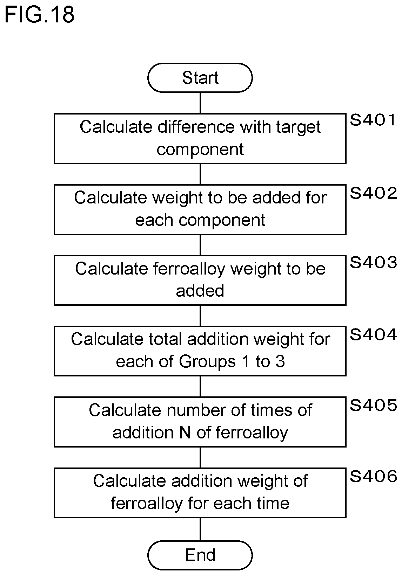

FIG. 18 is a flowchart illustrating an outline of the fourth calculation/calculation relating to addition of ferroalloys. On the basis of a target component of molten steel and a component fluctuation value due to the vacuum degassing process, a component difference between an initial component and the target component is calculated (step S401). From the calculated component difference and an initial weight of the molten steel, the weight (pure component amount) to be added is calculated for each component (step S402). The weight of a ferroalloy to be added is calculated in correspondence with the order of priority of a ferroalloy which is given to each component so that the sum of weights of main components contained in ferroalloys to be added satisfies the component difference (step S403). At this time, it is confirmed that an increase in components other than the main component does not cause the other components to deviate from a target range.

The total weight of ferroalloys to be added is calculated for each of Group 1 to Group 3 (step S404). The number of times of addition N of the ferroalloys is calculated for each of Group 1 to Group 3 so that the weight of a ferroalloy added one time does not exceed 4000 kg (step S405). The addition weight of ferroalloy for each time is calculated (step S406).

The number of times of addition N is determined as follows. Specifically, the weights of ferroalloys to be added for adjustment of the same component are added up in a descending order of priority, and the number of times of addition is determined so that the sum becomes 4000 kg to the maximum. For example, in a case where there are two types of ferroalloys to be added with the same component, and a first rank of priority: 2500 kg and a second rank of priority: 3500 kg are added, addition is performed twice as follows.

First addition: first rank of priority: 2500 kg + second rank of priority: 1500 kg
Second addition: second rank of priority: 2000 kg

Hereinafter, the third calculation and the fourth calculation will be described below in accordance with this embodiment. The third calculation/calculation related to a component fluctuation due to the vacuum degassing process is performed by employing the component-fluctuation prediction model 611 shown in FIG. 4, and first, an addition weight of a ferroalloy is calculated with respect to Si. As shown in FIG. 7, since Si belongs to Group 1 in addition of ferroalloys, the weight of a ferroalloy to be added is calculated first. In this embodiment, although specific values are not shown in the specific target component range shown in FIG. 6 and the initial component shown in FIG. 17, an initial component of Si falls below a target lower limit value and is almost 0% regardless of refining charge. The reason for this is because a large amount of oxygen is used when melting scraps in an electric furnace, oxidized Si is absorbed to electric furnace slag as $SiO_2$, and is separated from molten steel at the time of tapping to a ladle.

Furthermore, when performing the vacuum degassing process, Si decreases by 0.153% as shown in FIG. 10, and this value is a result of the third calculation which is calculated by the above-described component-fluctuation prediction model 611. Addition of Si (%) is expressed by the following expression.

Addition of Si (%) = target value - initial component + decrease of 0.153 (%) in vacuum degassing process

For example, in a case where the initial component is 0%, the target value is 0.04%, and the decrease in the vacuum degassing process is 0.153%, the amount of Si to be added is,

$$\text{Amount of Si (\%)} = 0.04~(\%) - 0~(\%) + 0.153~(\%)$$

$$= 0.193~(\%)$$

In addition, the amount of Si (%) is a proportion to the initial weight of 82800 kg, and thus an addition weight is calculated by the following expression.

Addition weight = initial weight $\times$ amount to be added (%) $\div$ content in --> ferroalloy (%)

Note that, in this embodiment, since an upper limit value of Al is provided in FIG. 6, Al cannot be used during refining, and this steel type is Si-deoxidized steel that is deoxidized with Si. Accordingly, a ferroalloy that is used for Si adjustment is defined as low-carbon Fe-Si as shown in FIG. 7. Furthermore, since the amount of Si contained in low-carbon Fe-Si is 75.2% to 75.3% (average: 75.25%),

$$\text{The weight of low-carbon Fe-Si (kg) to be added}$$

$$= 82800~(\text{kg}) \times 0.193~(\%) \div 75.25~(\%)$$

$$= 212~(\text{kg}) \fallingdotseq 220~(\text{kg})$$

Next, the weight of a ferroalloy to be added is calculated with respect to Ni and Mo belonging to Group 1 together with Si. Ni and Mo are not shown in FIG. 10, and this represents that a component amount does not fluctuate before and after the vacuum degassing process. In addition, from FIG. 7, a ferroalloy in a case of adding Ni is Ni briquette and the content thereof is 99.8%, a ferroalloy in a case of adding Mo is Fe-Mo, and the content thereof is 61.0% to 62.5% (average: 61.75%). From these conditions, the weight of ferroalloys to be added for adjusting Ni and Mo is calculated as follows in a similar manner as in Si.

$$\text{The weight of ferroalloy to be added}$$

$$= \text{initial weight} \times \text{amount to be added (\%)} \div \text{content in ferroalloy (\%)}$$

As a result,

the addition weight of Ni briquette is calculated as 400 kg,
the addition weight of Fe-Mo is calculated as 120 kg.

In this manner, the weights of ferroalloys relating to Si, Ni, and Mo are respectively calculated, and it is calculated that 740 kg (= 220 + 400 + 120) needs to be added for the entirety of Group 1.

Next, a calculation relating to Mn belonging to Group 2 in FIG. 7 is exemplified. An initial component of Mn is shown as XXXX in FIG. 17, but this value is lower than a target value shown in FIG. 6. The reason for this is due to use of oxygen in an electric furnace like Si. In addition, similarly to Si, when performing the vacuum degassing process later, Mn increases by 0.01% as shown in FIG. 10. Accordingly, addition of Mn (%) is expressed by the following expression.

Addition of Mn (%) = target value - initial component - increase of 0.01% in vacuum degassing process

Here, in a case where the initial component is 0.09%, the target value is 0.28%, and the increase in the vacuum degassing process is 0.01%, Mn to be added becomes 0.28 - 0.09 - 0.01 = 0.18 (%). Furthermore, the amount of Mn (%) is a proportion to the initial weight of 82800 kg, and the addition weight is calculated by the following expression.

Addition weight (kg) = initial weight (kg) $\times$ addition amount (%) $\div$ content in ferroalloy (%)

As an example, in a case of 0.18% of Mn is added with respect to the initial weight of 82800 kg, when the amount of Mn contained in the ferroalloy is 100%, a required addition weight is,

$$82800 \text{ (kg)} \times 0.18 \text{ (\%)} \div 100 \text{ (\%)} \fallingdotseq 150 \text{ (kg)}$$

On the other hand, in a case of adding Mn, as shown in FIG. 7, the order such as a selection priority: first rank/Si-Mn, second rank/high-carbon Fe-Mn, and third rank/low-carbon Fe-Mn, the amount of Mn (%) contained in each alloy, and the amount of impurity components other than Mn are determined. Therefore, in a case of adding 150 kg of pure Mn, addition of Si-Mn (priority: first rank) is considered first. In Si-Mn (priority: first rank), the content of Mn is 78.0% to 79.6% (average: 78.8%), and an addition weight in a case of adding 150 kg of Mn with only Si-Mn is calculated as follows.

$$\text{Addition weight (kg)} = 150 \text{ (kg)} \div 78.8\% = 190 \text{ (kg)}$$

However, since only 10.9% to 13.1% (average: 12.0%) of Si is contained in Si-Mn, 23 kg of Si is contained in 190 kg of Si-Mn, and this weight increases the amount of Si by 0.03%. Here, since the amount of Si in the molten steel reaches a target value due to addition of Group 1/low-carbon Fe-Si, Si-Mn (priority: first rank) cannot be used for addition of Mn, it is necessary to add high-carbon Fe-Mn or low-carbon Fe-Mn with a low Si content instead of Si-Mn. Since Mn contained in high-carbon Fe-Mn is 74.2% to 76.2% (average: 75.2%) from FIG. 7, approximately 200 kg of high-carbon Fe-Mn is required to add 150 kg of pure Mn, but components other than Mn is sufficiently low, and thus an effect on the components other than Mn is not big enough to be a problem.

As described above, although the priority of a ferroalloy used for each component is determined, the weight that can be used is limited due to the balance with other components contained in each ferroalloy. However, a method of calculating the weight of a ferroalloy to be added is similar to that described for Si, Ni, Mo, and Mn, and is carried out as follows on the basis of a component fluctuation amount of molten steel due to the vacuum degassing process, an initial component, a target component, the weight of molten steel, the content of each ferroalloy, and the content of other component.

Addition amount (%) = target value - initial component $\pm$ fluctuation in vacuum degassing process Addition weight (kg) = initial weight (kg) $\times$ addition amount (%) $\div$ amount of component contained in ferroalloy (%)

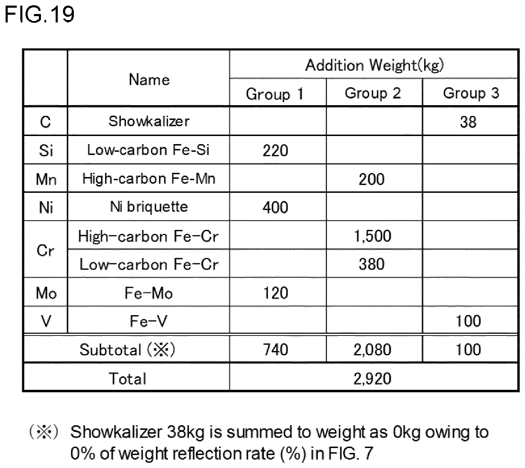

As a result of performing the calculation for each required component, a ferroalloy to be added is as shown in FIG. 19, and the fourth calculation is terminated. At this time, the sum of ferroalloys to be added in this embodiment is calculated as 2920 kg.

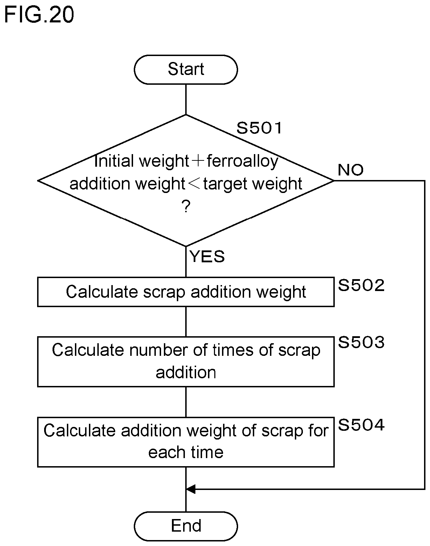

After performing the calculation (after calculating the addition weight of the ferroalloy), the fifth calculation/calculation related to addition of scraps can be performed. FIG. 20 is a flowchart illustrating an outline of the fifth calculation/calculation related to addition of scraps. First, a determination is made as to whether or not the sum of an initial weight and an addition weight of a ferroalloy is less than a target weight (step S501). In a case where the former is equal to or more than the latter (S501: NO), addition of scraps is not necessary, and thus the process is terminated. On the other hand, when the former is less than the latter (S501: YES), addition of scraps is necessary, an addition weight of the scraps is calculated in accordance with the following expression (step S502).

$$\text{Addition weight of scraps (kg)}$$
$$= \text{(target weight - (initial weight + addition weight of ferroalloy)) (kg)}$$

The number of times of addition N of scraps is calculated so that the weight of scraps added at one time does not exceed 4000 kg (step S503). Specifically, the number of times of addition N of a ferroalloy is determined as follows.

The number of times of addition N of scraps = [an addition weight of scraps (kg) ÷ 4000 (kg)] + 1

Next, an addition weight at each time is calculated on the basis of the determined number of times of addition N (step S504). Specifically, the addition weight is determined in correspondence with the number of times of addition N as follows.

- Case of N = 1
  The addition weight at first time (kg) = addition weight of scrap (kg)
- Case of N ≥ 2
  An addition weight (kg) from first time to (N-1)-th time = 4000 (kg)

An addition weight (kg) at N-th time = total addition weight of scraps (kg) - 4000× (N-1) (kg)

In this embodiment, the molten steel with the initial weight of 82800 kg further increases in weight because a total of 2920 kg of ferroalloy is added. As a result, the weight exceeds the target weight of 79700 kg (S501: NO), and thus it is determined that addition of scraps is not necessary. On the other hand, if it is necessary to add scraps, S502 to S504 described above are executed to calculate the number of times of addition of scraps and an addition weight thereof.

Calculations are performed as described above, and thus the third calculation/calculation shown in FIG. 16 related to a component fluctuation of the molten steel due to the vacuum degassing process, the fourth calculation/calculation related to the weight of the ferroalloy to be added, and the fifth calculation/calculation related to determination as to whether or not addition of scraps is necessary are performed. Accordingly, in addition to the calculation related to scrap addition corresponding to deficiency in weight of the molten steel, the number of times of addition and the addition weight are calculated with respect to ferroalloy addition performed to adjust a chemical component.

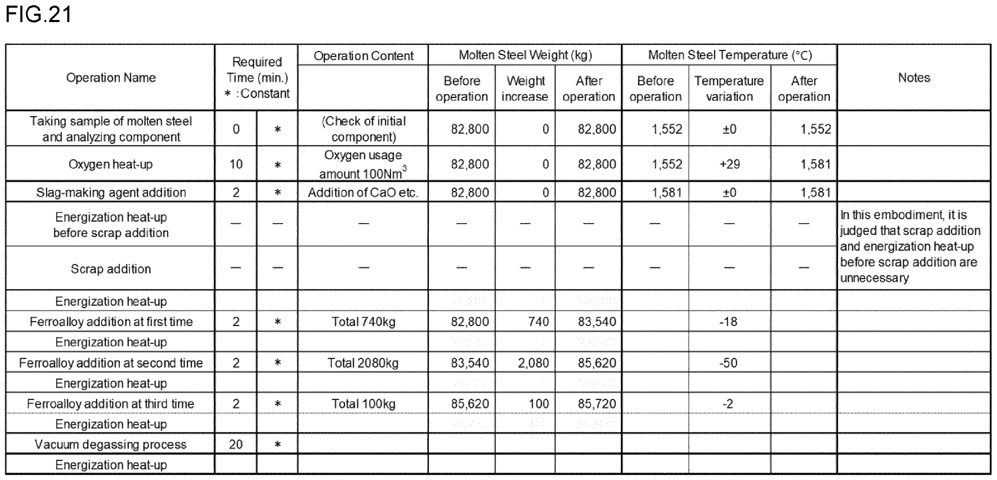

In this way, the calculations up to the fifth calculation are terminated, and the schedule of the refining process at this point is summarized as shown in FIG. 21. Note that, temperature lowering due to addition of ferroalloys performed three times is calculated by the following calculation.

- First temperature lowering

$$\text{Weight ratio relative to molten steel} = 740 \text{ (kg)} \div 82800 \text{ (kg)} \times 100$$

$$= 0.89 \text{ (\%)}$$

Temperature lowering of molten steel (°C) = 0.89 (%) × 20 (°C/%) ≒ 18 (°C)
- Second temperature lowering

$$\text{Weight ratio relative to molten steel} = 2080 \text{ (kg)} \div \{82800 \text{ (kg)} + 740 \text{ (kg) at}$$

$$\text{first addition}\} \times 100$$

$$= 2.49 \text{ (\%)}$$

Temperature lowering of molten steel (°C) = 2.49 (%) × 20(°C/%) ≒ 50 (°C)
- Third Temperature lowering

$$\text{Weight ratio relative to molten steel} = 100 \text{ (kg)} \div \{82800 \text{ (kg)} + 740 \text{ (kg) at}$$

$$\text{first addition} + 2080 \text{ (kg) at second addition}\} \times 100$$

$$= 0.12 \text{ (\%)}$$

Temperature lowering of molten steel (°C) = 0.12 (%) × 20(°C/%) ≒ 2 (°C)

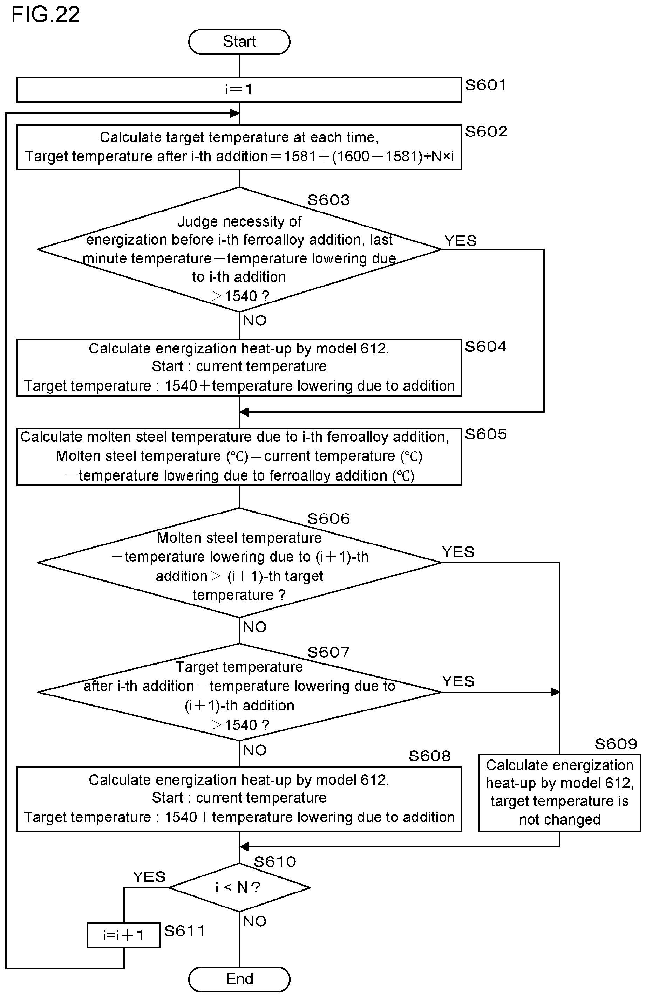

Next, as the sixth calculation shown in FIG. 16, a calculation related to energization heat-up is performed to compensate lowering of a molten steel temperature due to addition of the ferroalloys and the scraps (step S600). FIG. 22 shows a flowchart in the sixth calculation. First, 1 is set to a variable i (step S601).

The sixth calculation is performed in a case of adding the ferroalloys and the scraps. In the sixth calculation, a calculation related to N times of addition of the ferroalloys is performed while changing the variable i from 1 to N during addition of the ferroalloys in a total of N times. Note that, in this embodiment, addition of the ferroalloys is performed three times, and thus N is 3. In addition, in this embodiment, the weight of the molten steel is secured and addition of the scraps is not performed, energization heat-up before addition of the scraps is not performed. In addition, in this embodiment, when oxygen heat-up is terminated, the molten steel temperature is 1581°C and the weight of the molten steel is 82800 kg, and thus the above-described addition of the ferroalloys is performed three times to the molten steel in this state.

First, a target temperature of the molten steel at each time is calculated, but this calculation is performed to calculate a target temperature of each energization performed until finally reaching a target temperature of 1600°C before the vacuum degassing process with a temperature when oxygen heat-up is terminated set as a start temperature. Here, the target temperature is calculated without considering temperature lowering of the molten steel due to addition of the scraps or the ferroalloys. In addition, in this embodiment, at first, at i=1, the temperature is raised from the start temperature of 1581°C to 1600°C by energization performed three times, but at i=2, the number of times of energization is remaining two, and at i=3, the number of times energization is remaining one.

Therefore, a target temperature after i-th addition can be expressed as follows.

$$\text{A target temperature (°C) after i-th addition of a ferroalloy}$$

$$= 1581 + (1600 - 1581) \div (N-(i-1)) \times i$$

Specifically, results in the following table are calculated (step S602).

| Calculation loop | Target temperature after first addition | Target temperature after second addition | Target temperature after third addition | Remarks |
|---|---|---|---|---|
| First time | 1587°C | 1594°C | 1600°C | 1581°C→1600°C /three times of uniform heating |
| Second time | - | 1591°C | 1600°C | 1581°C→1600°C /two times of uniform heating |
| Third time | - | - | 1600°C | 1581°C→1600°C /one time of uniform heating |

On the other hand, the amount of temperature lowering of the molten steel due to addition of the ferroalloys is obtained by the above-described calculation. However, it is necessary to sufficiently raise the molten steel temperature in advance through energization heat-up so that the molten steel temperature does not fall below an allowable lowest temperature of 1540°C even when the temperature lowing occurs. Specifically, a determination as to whether or not energization heat-up is necessary before the first addition of a ferroalloy requires calculation of the molten steel temperature at the first addition of the ferroalloy. In this embodiment, the molten steel temperature becomes 1581°C after oxygen heat-up, and when performing the first addition of the ferroalloy, the temperature lowers by 18°C, and from the following calculation,

$$\text{Temperature (°C) of the molten steel after first addition of the ferroalloy}$$

$$= \text{temperature (°C) before first addition of ferroalloy - lowering temperature}$$

$$\text{(°C) due to first addition of ferroalloy}$$

$$= 1581 \text{ (°C)} - 18 \text{ (°C)}$$

$$= 1563 \text{ (°C)}$$

> the allowable lowest temperature of 1540 (°C)

It can be seen that the temperature after addition is higher than the allowable lowest temperature, and thus it is determined that the energization heat-up is not necessary before the first addition (step S603: YES).

On the other hand, in step S603, in a case where it is determined that the energization heat-up is necessary (step S603: NO), it is necessary to previously assign a temperature lowering below the allowable lowest temperature of 1540°C due to addition of the ferroalloy to the molten steel in advance. Therefore, the target temperature is given by the following expression, an energization heat-up calculation by the energization heat-up prediction model 612 is performed to raise the molten steel temperature (step S604).

$$\text{Target temperature (°C)} = \text{current temperature} + \text{temperature lowering}$$

$$\text{below than } 1540 \text{ (°C) due to addition of ferroalloy}$$

$$= \text{current temperature} + 1540 \text{ (°C)} - (\text{current temperature} - \text{temperature}$$

$$\text{lowering due to addition)}$$

$$= 1540 \text{ (°C)} + \text{temperature lowering due to addition}$$

In this way, after the energization heat-up is performed as necessary, the first addition of a ferroalloy is performed, and in step S605, a molten steel temperature after addition is obtained.

Next, a determination is made as to whether or not the second addition of the ferroalloy can be performed at the current temperature (step S606). In this embodiment, it is determined that energization heat-up is necessary before the second addition by the following expression (S606: NO).

$$\text{Molten steel temperature} - \text{temperature lowing (°C) due to the second}$$

$$\text{addition} = 1563 - 50$$

$$= 1513$$

$$< 1594 \text{ (target temperature after second addition)}$$

In this way, energization heat-up is necessary before the second addition, but it is necessary to determine a target temperature for energization. First, in step S601, the target temperature after the first addition is obtained as 1587°C, but the temperature does not consider temperature lowering due to addition of the ferroalloy, and thus it is necessary to determine whether or not the temperature is appropriate for the target temperature of the energization heat-up. Here, when considering a case where heat is raised to 1587°C, and the second addition is performed at this temperature, from the following expression, it can be seen that the temperature of 1587°C is low as an energization target temperature, and a higher temperature is necessary (step S607: NO).

$$\text{Molten steel temperature (°C)} = 1587 - 50$$

$$= 1537$$

$$< 1540$$

Therefore, in the same concept as in S604, a new energization heat-up target temperature is calculated (step S608) as follows.

$$\text{Target temperature (°C)} = \text{current temperature} + \text{temperature lowering}$$

$$\text{below 1540°C due to addition of ferroalloy}$$

$$= \text{current temperature} + (1540 - (\text{current temperature} - \text{temperature lowering}$$

$$\text{due to addition of ferroalloy}))$$

$$= 1540 + \text{temperature lowering due to addition of ferroalloy}$$

Through the calculation, 1590 (=1540 + 50) (°C) becomes a new energization heat-up target temperature.

In this way, in a case where a calculation at i=1 is terminated (step S610: YES), i is incremented by "1" (step S611), and a calculation at i=2 is performed. In a similar manner as described above, a target temperature after second addition is calculated (S602). Since the first addition has been terminated, the remaining number of times of addition is two. A temperature is raised from the current start temperature of 1581°C to 1600°C through three times of energization, but at first, the calculation is performed at i=1, and the following expression is established (S602).

$$\text{Target temperature (°C) after i-th addition of ferroalloy} = 1581 + (1600 - 1581) \div N \times i$$

Then, a relationship of 1593 - 50 = 1543 > 1540 is established (S603: YES), and the molten steel temperature becomes 1543°C (S605).

Next, a determination is made as to whether or not energization heat-up before the subsequent addition is necessary (step S606). It is determined that energization heat-up before the third addition is necessary (S606: NO) by the following expression.

$$\text{Molten steel temperature - temperature lowering (°C) due to third addition} =$$

$$1543 - 2 = 1541$$

$$< 1591 \text{ (target temperature after second addition)}$$

In this manner, energization heat-up is necessary before the third addition, but it is necessary to determine a target temperature for energization. First, at S501, the target temperature after the second addition is obtained as 1591°C, but this temperature does not consider temperature lowering due to addition of a ferroalloy, and thus it is necessary to determine whether or not this temperature is appropriate for the target temperature of the energization heat-up. Here, when considering a case where a temperature is raised to 1591°C and the third addition is performed at this temperature, from the following expression, it can be seen that the temperature of 1591°C is sufficiently high as the energization target temperature, and the energization target temperature is not necessary to be changed (S607: YES).

$$\text{Molten steel temperature (°C)} = 1591 - 2$$

$$= 1589$$

$$> 1540$$

Due to the determination, the energization heat-up target temperature is not necessary to be changed, and becomes 1591°C calculated for the first time, and then a calculation of energization heat-up before the third addition is performed by using the energization heat-up prediction model 612 (step S609). As calculation results at this time, required time is 30 minutes, overshoot is present, and a temperature after heat-up is 1594°C.

In this way, the calculation at i=2 is terminated, and after the passage of the loop from S610 to S611, the subsequent calculation at i=3 is performed. In a similar manner as described above, a target temperature after the third addition is calculated (S602). Since the second addition has been terminated already, the remaining number of times of addition is one. A temperature is raised from the start temperature of 1581 °C to 1600°C with energization performed once, but since the calculation is performed at i=3, the target temperature after the third addition of ferroalloys becomes 1600°C (S602) by the following expression.

Target temperature (°C) after i-th addition of ferroalloy = 1581 + (1600 - 1581) ÷ N × i

In addition, since temperature lowering at the third addition of the ferroalloy is 2°C, from the following expression,

$$1594 - 2 = 1592$$

$$> 1540 \ (S603: \ YES)$$

the molten steel temperature becomes 1594°C (step S605).

Furthermore, in step S405, since the fourth addition of a ferroalloy is not performed, temperature lowering is regarded as 0°C, and from the following expression, it can be seen that the energization target temperature is not necessary to be changed (step S605: NO).

$$\text{molten steel temperature} = 1592 - 0 = 1592$$

$$< 1600$$

Through this determination, 1600°C becomes the energization heat-up target temperature, and a calculation of the energization heat-up is performed (step S608). As results of this calculation, required time is 10 minutes, overshoot is present, and a temperature after heat-up is 1605°C.

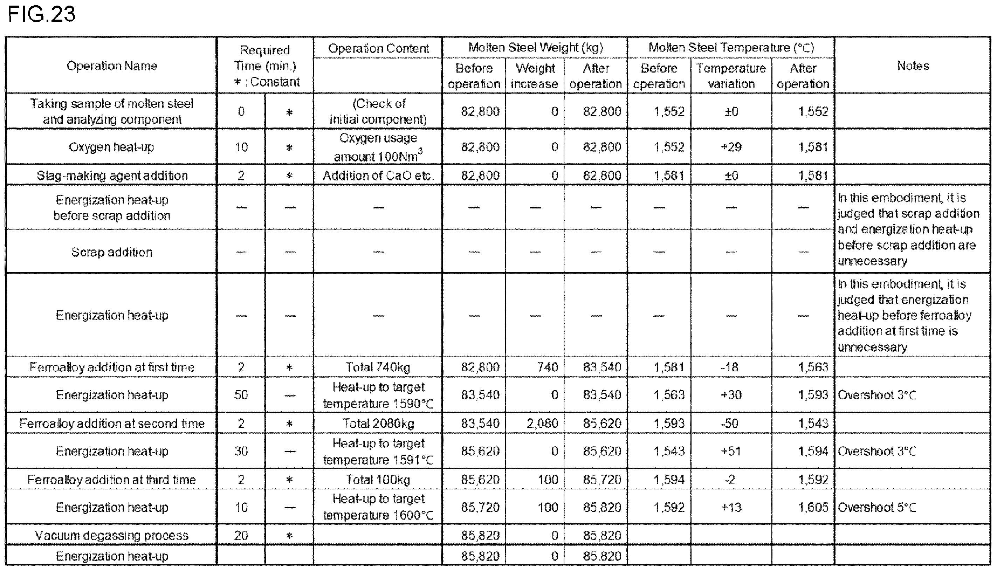

In this manner, scheduling of the refining process when the sixth calculation is terminated is summarized as shown in FIG. 23. In other words, FIG. 23 is a table in which the results of the sixth calculation are added to the table in FIG. 21.

After addition of all ferroalloys and energization heat-up before the vacuum degassing process are terminated, a calculation related to a molten steel temperature that lowers in the vacuum degassing process is performed as the seventh calculation (step S700 in FIG. 16). As described above, when performing the vacuum degassing process, temperature lowering occurs in the molten steel, and thus energization heat-up is performed after the vacuum degassing process. However, time required for energization heat-up varies depending on the degree of temperature lowering, and this has an effect on scheduling of the refining process.

The seventh calculation is performed by employing the temperature-lowering prediction model 613 shown in FIG. 4. In this embodiment, a molten steel temperature that lowers due to the vacuum degassing process is calculated by the temperature-lowering prediction model 613 on the basis of various conditions of the refining process, and the temperature lowering is calculated to be 28°C. That is, in this embodiment, it can be understood that from a molten steel temperature (1605°C) before the vacuum degassing process after addition of all ferroalloys is terminated, the molten steel temperature lowers by 28°C due to the vacuum degassing process and the molten steel temperature becomes 1577°C.

When the seventh calculation is terminated, a calculation related to energization heat-up that is subsequently performed as the eighth calculation with respect to molten steel of which a temperature lowers due to the vacuum degassing process (step S800 in FIG. 16).

The eighth calculation is performed by employing the energization heat-up prediction model 612 shown in FIG. 4. As described above, since the molten steel temperature lowers by 28°C during the vacuum degassing, it is necessary to heat the molten steel by applying a current to the molten steel after termination of the vacuum degassing so as to compensate the temperature lowering of the molten steel. A calculation of energization heat-up time after the vacuum degassing is performed by using the energization heat-up prediction model 612 as in the energization heat-up time calculation after addition. The molten steel temperature is predicted at a pitch of five minutes by using the energization heat-up prediction model 612, the predicted molten steel temperature is compared with the refining termination target temperature (1650°C as shown in FIG. 5), and time when the predicted molten steel temperature is closest to the target temperature is set as the energization heat-up time after vacuum degassing. Specifically, in a case where when the energization time is set to 50 minutes, the molten steel temperature outputted from the energization heat-up prediction model 612 is 1647°C, and when the energization time is set to 55 minutes, the molten steel temperature outputted from the energization heat-up prediction model 612 is 1655°C, "50 minutes" related to 1647°C closest to the refining termination target temperature (1650°C) is set as the energization heat-up time after vacuum degassing.

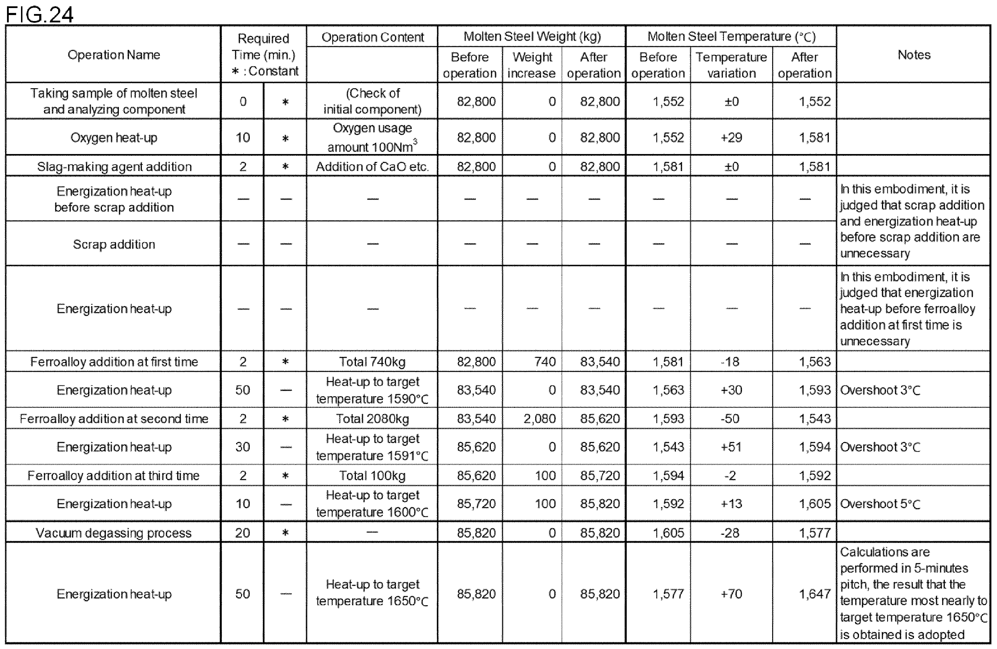

Results of the first calculation to the eighth calculation performed as described above are shown in FIG. 24. FIG. 24 is a table showing results of scheduling processing performed by the information processing apparatus 100 of this embodiment. The scheduling results in FIG. 24 include an operation name column, a required time column, an operation content column, a molten steel weight column, and a molten steel temperature column. Respective operations in the refining process are shown in the operation name column. The required time calculated as described above, and required time determined in advance are shown in the required time column for every operation. Detailed operation contents in each operation are shown in the operation content column. The molten steel weight before and after each operation is shown in the molten steel weight column. The molten steel temperature before and after each operation is shown in the molten steel temperature column.

The invention is not limited to the above description. For example, the control unit 10 may be configured to display the scheduling processing results shown in FIG. 24 on the display unit 40.

As described above, since a series of complicated operations in the refining process are performed by using the results (hereinafter, referred to as "operation schedule") scheduled by the information processing apparatus 100 of this embodiment, it is possible to support an operation of an operator in all process steps of the refining process, it is possible to suppress a deviation in operation for every operator, and to stabilize the quality of products.

In addition, as described above, since the information processing apparatus 100 of this embodiment employs the machine-learned prediction models 611 to 613 when creating an operation schedule, it is possible to create the operation schedule on the basis of prediction with high accuracy.

In addition, as described above, when calculating an addition weight of ferroalloys, the information processing apparatus 100 of this embodiment employs a component fluctuation amount after degassing which is outputted from the component-fluctuation prediction model 611. That is, when calculating the addition weight of the ferroalloys, since consideration is given to a fluctuation of a component amount due to a reduction reaction occurring during the vacuum degassing, it is possible to obtain results with higher accuracy.

In addition, as described above, the information processing apparatus 100 of this embodiment predicts the molten steel temperature while extending energization time at a predetermined time interval, and compares each predicted molten steel temperature with the target temperature to calculate energization heat-up time. Accordingly, the information processing apparatus 100 of this embodiment can more quickly reduce the burden related to the calculation process of the energization heat-up time.

Hereinbefore, description has been given with reference to a case where the component-fluctuation prediction model 611 uses elastic net regression as an example, but there is no limitation thereto (the refining process is a reduction process of reducing a concentration of oxygen in molten steel while using Si or Al as a deoxidizing material, and in this case, prediction of an influence of a redox reaction is less susceptible to external influences, and thus the elastic net regression can obtain results with high accuracy as compared with random forest regression, and thus the elastic net regression is selected). For example, Ridge regression or Lasso regression may be used.

Hereinbefore, description has been given with reference to a case where the energization heat-up prediction model 612 and the temperature-lowering prediction model 613 use a forest (random forest) model as an example, but there is no limitation thereto (a variation of the molten steel temperature is also affected by parameters such as the amount of heat storage in a ladle, which is not included in input conditions and is difficult to measure, and the like, the random forest regression can obtain results with high accuracy as compared with the elastic net regression, and thus the random forest regression is selected). For example, a logistic regression model, a support vector machine, or the like may be used.

Hereinbefore, description has been given with reference to a case where training (learning) of the prediction models 611 to 613 is performed by the information processing apparatus 100 as an example, but there is no limitation thereto, and training (learning) may be executed by another computer. That is, the trained prediction models 611 to 613 trained by the other computer may be deployed to the information processing apparatus 100.

**Claims**

1. A program (P) that causes a computer to carry out processing of executing,

   first calculation (S100) related to an oxygen heat-up operation for raising a molten steel temperature at the initial stage of refining,
   second calculation (S200) related to a slag-making agent adding operation,
   third calculation (S300) related to a component fluctuation of molten steel due to a vacuum degassing process,
   fourth calculation (S400) related to addition of ferroalloys,
   fifth calculation (S500) related to addition of scraps,
   sixth calculation (S600) related to energization heat-up for supplementing lowering of the molten steel temperature due to addition of ferroalloys and scraps,
   seventh calculation (S700) related to the molten steel temperature that lowers in a vacuum degassing process, and
   eighth calculation (S800) related to energization heat-up for supplementing lowering of the molten steel temperature due to the vacuum degassing process, and
   performing scheduling of the entirety of the refining process by obtaining time required for the oxygen heat-up operation, the slag-making agent adding operation, the scrap adding operation, the ferroalloy adding operation, the vacuum degassing process operation, and the energization heat-up operation, and by obtaining an addition weight of the scraps, and a kind, an addition weight, and the number of times of addition of the ferroalloys to be added.

**2.** The program (P) according to claim 1, wherein
in the first calculation (S100), a molten steel temperature that rises in the oxygen heat-up operation is calculated from an initial weight of the molten steel and the amount of oxygen used.

**3.** The program (P) according to claim 1, wherein
in the second calculation (S200), time required for an operation of adding the slag-making agent to molten steel is obtained.

**4.** The program (P) according to claim 1, wherein
in the third calculation (S300), first input data including a molten steel component amount at the initial stage of refining, a molten steel weight at the initial stage of refining, the amount of the slag-making agent used, and a vacuum degassing condition is acquired, and the amount of fluctuation of components after the vacuum degassing process is outputted by inputting the acquired first input data to a first learning model (611) trained to output the amount of fluctuation of components after the vacuum degassing process in a case where the first input data is inputted.

**5.** The program (P) according to claim 4, wherein
in the fourth calculation (S400), an addition weight of the ferroalloys is calculated on the basis of a target amount of object components in the molten steel, a molten steel component amount at the initial stage of refining, and the calculated amount of fluctuation of components after the vacuum degassing process, and the addition weight at the time of each addition and the number of times of addition are calculated so as not to exceed a maximum addition weight allowable per addition.

**6.** The program (P) according to claim 5, wherein
in the fifth calculation (S500), an addition weight of the scraps is calculated on the basis of the weight of the molten steel at the initial stage of refining, a target weight of the molten steel after termination of refining, and the calculated addition weight of the ferroalloys.

**7.** The program (P) according to claim 1, wherein
in the sixth calculation (S600), a molten steel temperature lowered value is calculated on the basis of the molten steel temperature at the initial stage of refining, an addition weight of the ferroalloys, and an addition weight of the scraps, a determination is made as to whether or not energization heat-up is necessary so as not to fall below the lowest allowable temperature, an energization target temperature is set in a case where the energization heat-up is necessary, second input data including information specifying a ladle furnace, a molten steel temperature before energization, and the energization target temperature is acquired, and energization time is obtained by using a rising temperature of molten steel during energization which is obtained by inputting the acquired second input data to a second learning model (612) trained to output a rising temperature of molten steel during energization in a case where the second input data is inputted.

**8.** The program (P) according to claim 1, wherein
in the seventh calculation (S700), third input data including information specifying a ladle furnace, a molten steel weight and a molten steel temperature at the initial stage of refining, a vacuum degassing process start target temperature, a refining termination target temperature, and the amount of the slag-making agent used is acquired, and a molten steel temperature lowered value due to the vacuum degassing process is obtained by inputting the acquired third input data to a third learning model (613) trained to output the molten steel temperature lowered value due to the vacuum degassing process in a case where the third input data is inputted.

**9.** The program (P) according to claim 1, wherein
in the eighth calculation (S800), second input data including information specifying a ladle furnace, a molten steel temperature before energization, and an energization target temperature is acquired, and energization time is obtained by using a rising temperature of molten steel during energization which is obtained by inputting the acquired second input data to a second learning model (612) trained to output a rising temperature of molten steel during energization in a case where the second input data is inputted.

**10.** The program (P) according to any one of claims 1 to 9, wherein

in the scheduling, time required for the oxygen heat-up operation and the slag-making agent adding operation determined in advance, ferroalloy adding operation time calculated by using the number of times of addition of the ferroalloys which is obtained in the fourth calculation (S400), scrap adding operation time calculated by using the number of times of addition of the scraps which is obtained in the fifth calculation (S500), energization time required for energization heat-up which is obtained in the sixth calculation (S600), vacuum degassing process time determined in advance, and energization time required for energization heat-up after the vacuum degassing process which is obtained in the eighth calculation (S800) are combined in time series, and

a fluctuation of a component amount of the molten steel before and after the vacuum degassing process is predicted in the third calculation (S300), the weight of the ferroalloys to be added and the number of times of addition thereof are calculated in the fourth calculation (S400), and the weight of the scraps to be added and the number of times of addition thereof are calculated in the fifth calculation (S500),

thereby predicting detailed contents of the refining process operation in advance and to support operators.

**11.** An information processing apparatus (100), comprising:

a control unit (10),
wherein the control unit (10) executes,
first calculation (S100) related to an oxygen heat-up operation for raising a molten steel temperature at the initial stage of refining,
second calculation (S200) related to a slag-making agent adding operation,
third calculation (S300) related to a component fluctuation of molten steel due to a vacuum degassing process,
fourth calculation (S400) related to addition of ferroalloys,
fifth calculation (S500) related to addition of scraps,
sixth calculation (S600) related to energization heat-up for supplementing lowering of the molten steel temperature due to addition of ferroalloys and scraps,
seventh calculation (S700) related to the molten steel temperature that lowers in a vacuum degassing process, and
eighth calculation (S800) related to energization heat-up for supplementing lowering of the molten steel temperature due to the vacuum degassing process, and
performs scheduling of the entirety of the refining process by obtaining time required for the oxygen heat-up operation, the slag-making agent adding operation, the scrap adding operation, the ferroalloy adding operation, the vacuum degassing process operation, and the energization heat-up operation, and by obtaining an addition weight of the scraps, and a kind, an addition weight, and the number of times of addition of the ferroalloys to be added.

**12.** An information processing method in which a computer carries out processing of executing,

first calculation (S 100) related to an oxygen heat-up operation for raising a molten steel temperature at the initial stage of refining,
second calculation (S200) related to a slag-making agent adding operation, third calculation (S300) related to a component fluctuation of molten steel due to a vacuum degassing process,
fourth calculation (S400) related to addition of ferroalloys,
fifth calculation (S500) related to addition of scraps,
sixth calculation (S600) related to energization heat-up for supplementing lowering of the molten steel temperature due to addition of ferroalloys and scraps,
seventh calculation (S700) related to the molten steel temperature that lowers in a vacuum degassing process, and
eighth calculation (S800) related to energization heat-up for supplementing lowering of the molten steel temperature due to the vacuum degassing process, and
performing scheduling of the entirety of the refining process by obtaining time required for the oxygen heat-up operation, the slag-making agent adding operation, the scrap adding operation, the ferroalloy adding operation, the vacuum degassing process operation, and the energization heat-up operation, and by obtaining an addition weight of the scraps, and a kind, an addition weight, and the number of times of addition of the ferroalloys to be added.

# FIG.1

Scrap addition and energization heat-up are executed
in several times in accordance with addition weight

Tapping from electric furnace → Taking sample of molten steel and analyzing component → Oxygen heat-up → Slag-making agent addition → Energization heat-up and scrap addition in deficiency of molten steel ---- Energization heat-up and scrap addition in deficiency of molten steel →

Energization heat-up / Ferroalloy addition → Energization heat-up / Ferroalloy addition ---- Energization heat-up / Ferroalloy addition ---- Energization heat-up → Vacuum degassing process → Energization heat-up → Next process (Pouring operation)

Ferroalloy addition is usually executed in three times
but in four or more times under conditions and sometimes
energization heat-up is executed before addition

EP 4 570 925 A1

FIG.2

| | Weight | Component | Temperature |
|---|---|---|---|
| Tapping from electric furnace | — | — | Lowering |
| Taking sample of molten steel and checking component | — | — | — |
| Oxygen heat-up | — | — | Rising |
| Slag-making agent addition | — | — | — |
| Energization heat-up | — | — | Rising |
| Scrap addition | Increase | — | Lowering |
| Ferroalloy addition | Increase | Fluctuation | Lowering |
| Vacuum degassing process | — | Fluctuation | Lowering |

# FIG.3

| Operation Name | Required Time (min.) * : Constant | | Operation Content | Molten Steel Weight (kg) | | | Molten Steel Temperature (°C) | | | Notes |
|---|---|---|---|---|---|---|---|---|---|---|
| | | | | Before operation | Weight increase | After operation | Before operation | Temperature variation | After operation | |
| Taking sample of molten steel and analyzing component | 0 | * | (Check of initial component) | 82,800 | 0 | 82,800 | 1,552 | ±0 | 1,552 | |
| Oxygen heat-up | 10 | * | Oxygen usage amount 100Nm$^3$ | 82,800 | 0 | 82,800 | 1,552 | | | |
| Slag-making agent addition | 2 | * | Addition of CaO etc. | 82,800 | 0 | 82,800 | | ±0 | | |
| Energization heat-up before scrap addition | | | | | | | | | | Scrap addition is often executed in several times as a response to deficiency of molten steel weight and energization heat-up is often executed before addition |
| Scrap addition | | | | | | | | | | |
| · | | | | | | | | | | |
| · | | | | | | | | | | |
| · | | | | | | | | | | |
| Energization heat-up | | | | | | | | | | |
| Ferroalloy addition | | | | | | | | | | |
| Energization heat-up | | | | | | | | | | |
| Ferroalloy addition | | | | | | | | | | |
| Energization heat-up | | | | | | | | | | |
| Ferroalloy addition | | | | | | | | | | |
| · | | | | | | | | | | |
| · | | | | | | | | | | |
| · | | | | | | | | | | |
| Energization heat-up | | | | | | | | | | |
| Vacuum degassing process | 20 | * | | | | | | | | |
| Energization heat-up | | | | | | | | | | |

EP 4 570 925 A1

FIG.4

FIG.5

| Ladle size | | Middle | |
|---|---|---|---|
| Steel type | | XXXX | |
| Molten steel weight | Initial weight (kg) | 82,800 | |
| | Target weight (kg) | 79,700 | |
| Molten steel temperature | Initial temperature (°C) | 1,552 | |
| | Vacuum degassing process start target temperature (°C) | 1,600 | * |
| | Refining termination target temperature (°C) | 1,650 | * |
| | Allowable lowest temperature (°C) | 1,540 | * |
| Oxygen Heat-up Condition | Oxygen usage amount (Nm$^3$) | 100 | * |
| Slag-making Agent Usage Amount | CaO(kg) | 1,400 | |
| | Other than CaO (kg) | 700 | |
| | Total (kg) | 2,100 | |
| Energization heat-up | AC voltage (V) | 250 | |
| | AC current (kA) | 25 | |
| Vacuum degassing process | High-vacuum duration time (min.) | 5 | |
| | Total time (min.) | 20 | |
| | Ar flow rate (L/min.) | 200 | |
| Each Operation Time (only fixed value) | Oxygen heat-up (min.) | 10 | * |
| | Slag-making agent addition (min.) | 2 | * |
| | Ferroalloy addition (min.) | 2 | * |
| | Scrap addition (min.) | 2 | * |

※) Mark * is always constant regardless of refining charge

FIG.6

|  | Target Component Range(%) | |
|---|---|---|
|  | Lower limit value | Upper limit value |
| C | Target value -0.005 | Target value +0.005 |
| Si | Target value -0.01 | Target value +0.01 |
| Mn | Target value -0.025 | Target value +0.025 |
| S |  | XXXX |
| Cr | Target value -0.10 | Target value +0.10 |
| Ni | Target value -0.04 | Target value +0.05 |
| Mo | Target value -0.02 | Target value +0.03 |
| V | Target value -0.005 | Target value +0.005 |
| P |  | XXXX |
| Cu |  | XXXX |
| Sn |  | XXXX |
| Al |  | XXXX |

# FIG.7

| Object Component | Group | Selection/ Priority Order etc. | Name | Molten Steel Weight Reflection Rate(%) | Contained Component(%) | | | | | | | | | | | | | | | | | Weighable Minimum Weight |
|---|---|---|---|---|---|---|---|---|---|---|---|---|---|---|---|---|---|---|---|---|---|---|
| | | | | | C | Si | Mn | P | S | Ni | Cr | Cu | Mo | V | Al | Ti | N | Co | Ca | Pb | |
| — | — | Use at deficiency of weight | Scrap | 90 | XXX | | XXX | XXX | | XX | XX | XX | XX | | | | | | | | — |
| Si | 1 | Use for Si-deoxidized steel | Low-carbon Fe-Si | 50 | 0.010 / 0.037 | 75.2 / 75.3 | | 0.012 / 0.021 | | | | | | | 0.016 / 0.02 | | | | | | 10kg |
| | | Use for Al-deoxidized steel | CaSi | 0 | 0.37 | 60.85 | | 0.030 | 0.030 | | | | | | 0.49 | | | | 31.15 | | 10kg |
| Ni | | 1 | Ni briquette | 100 | | | | | | 99.8 | | | | | | | | 0.2 | | | 20kg |
| Mo | | 1 | Fe-Mo | 100 | 0.030 | 0.180 / 0.900 | | 0.030 | 0.030 | | | 0.150 / 0.220 | 61.0 / 62.5 | | | | | | | 0.003 / 0.005 | 20kg |
| Mn | 2 | 1 | Si-Mn | 100 | 0.14 / 0.25 | 10.9 / 13.1 | 78.0 / 79.6 | 0.017 / 0.025 | 0.017 / 0.020 | | | | | | | | | | | | 20kg |
| | | 2 | High-carbon Fe-Mn | 100 | 6.9 / 7.0 | 0.1 | 74.2 / 76.2 | 0.129 / 0.143 | 0.003 | | | | | | | | | | | | 20kg |
| | | 3 | Low-carbon Fe-Mn | 100 | 0.081 / 0.089 | 0.80 / 0.86 | 89.4 / 89.9 | 0.042 / 0.044 | 0.003 | | | | | | | | | | | | 20kg |
| Cr | | 1 | High-carbon Fe-Cr | 100 | 7.46 / 7.85 | 2.38 / 3.92 | | 0.015 | 0.028 / 0.058 | | 57.5 / 59.9 | | | 0.13 | | 0.11 | | 0.11 | | | 10kg |
| | | 2 | Low-carbon Fe-Cr | 100 | 0.052 / 0.088 | 0.57 / 0.97 | | 0.023 / 0.025 | 0.005 / 0.012 | | 61.1 / 66.7 | | | | | | | | | | 10kg |
| C | 3 | 1 | Showkalizer | 0 | 100 | | | | | | | | | | | | | | | | 1kg |
| V | | 1 | Fe-V | 100 | 0.15 / 0.19 | 0.64 / 0.77 | | 0.02 / 0.03 | 0.01 | | | | | 81.5 / 83.1 | 0.06 / 0.70 | | | | | | 1kg |

FIG.8

| Model ID | Learning model | Kind | Creation Date and Time |
|---|---|---|---|
| 1 | First learning model | Component-fluctuation prediction model 611 | XXXX. XX. XX. XX. XX. |
| 2 | Second learning model | Energization heat-up prediction model 612 | XXXX. XX. XX. XX. XX. |
| 3 | Third learning model | Temperature-lowering prediction model 613 | XXXX. XX. XX. XX. XX. |

FIG.9

| Training ID | Input Data (Problem Data) | | | | | | | | Output Data (Answer Data) |
|---|---|---|---|---|---|---|---|---|---|
| | Molten steel component at initial stage of refining (%) | Molten steel component after vacuum degassing process (%) | Molten steel weight at initial stage of refining (kg) | Slag-making agent usage amount(kg) | | Vacuum degassing process condition | | | Actual component fluctuation amount (%) |
| | | | | CaO | Other than CaO | High-vacuum duration time (min.) | Total time (min.) | Ar flow rate (L/min.) | |
| ID01 | C : XXX<br>Si : XXX<br>·<br>·<br>· | C : XXX<br>Si : XXX<br>·<br>·<br>· | XXXXX | XXXX | XXX | XX | XX | XXX | C : XXX<br>Si : XXX<br>Mn : XXX<br>S : XXX<br>Cr : XXX |
| ID02 | C : XXX<br>Si : XXX<br>·<br>·<br>· | C : XXX<br>Si : XXX<br>·<br>·<br>· | XXXXX | XXXX | XXX | XX | XX | XXX | C : XXX<br>Si : XXX<br>Mn : XXX<br>S : XXX<br>Cr : XXX |
| ID03 | C : XXX<br>Si : XXX<br>·<br>·<br>· | C : XXX<br>Si : XXX<br>·<br>·<br>· | XXXXX | XXXX | XXX | XX | XX | XXX | C : XXX<br>Si : XXX<br>Mn : XXX<br>S : XXX<br>Cr : XXX |
| ID04 | C : XXX<br>Si : XXX<br>·<br>·<br>· | C : XXX<br>Si : XXX<br>·<br>·<br>· | XXXXX | XXXX | XXX | XX | XX | XXX | C : XXX<br>Si : XXX<br>Mn : XXX<br>S : XXX<br>Cr : XXX |
| ID05 | C : XXX<br>Si : XXX<br>·<br>·<br>· | C : XXX<br>Si : XXX<br>·<br>·<br>· | XXXXX | XXXX | XXX | XX | XX | XXX | C : XXX<br>Si : XXX<br>Mn : XXX<br>S : XXX<br>Cr : XXX |

EP 4 570 925 A1

FIG.10

| Component | Actual Measured Component Fluctuation Amount (%) |
|-----------|--------------------------------------------------|
| C         | −0.003                                           |
| Si        | −0.153                                           |
| Mn        | 0.01                                             |
| S         | −0.003                                           |
| Cr        | 0.021                                            |

FIG.11

| Training ID | Input Data (Problem Data) | | | | | | | | | | | Output Data (Answer Data) |
|---|---|---|---|---|---|---|---|---|---|---|---|---|
| | Ladle size | Molten steel weight at initial stage of refining (kg) | Slag-making agent usage amount (kg) | | Molten steel temperature after oxygen heat-up (°C) | Elapsed time from start of refining (min.) | Energization condition | | Input energy by energization (J) | Actual measured molten steel temperature (°C) | | |
| | | | CaO | Other than CaO | | | AC voltage (kV) | AC current (A) | | Before energization | After energization | |
| ID01 | X | XXXXX | XXXX | XXX | XXXX | XX | XXX | XX | XXXXX | XXXX | XXXX | ○ |
| ID02 | X | XXXXX | XXXX | XXX | XXXX | XX | XXX | XX | XXXXX | XXXX | XXXX | △ |
| ID03 | X | XXXXX | XXXX | XXX | XXXX | XX | XXX | XX | XXXXX | XXXX | XXXX | □ |
| ID04 | X | XXXXX | XXXX | XXX | XXXX | XX | XXX | XX | XXXXX | XXXX | XXXX | ◇ |
| ID05 | X | XXXXX | XXXX | XXX | XXXX | XX | XXX | XX | XXXXX | XXXX | XXXX | ☆ |

FIG.12

| Training ID | Input Data (Problem Data) | | | | | | | Output Data (Answer Data) |
|---|---|---|---|---|---|---|---|---|
| | Ladle size | Molten steel weight at initial stage of refining (kg) | Molten steel temperature at initial stage of refining (°C) | Slag-making agent usage amount (kg) | | Vacuum degassing start target temperature (°C) | Refining termination target temperature (°C) | Actual measured temperature lowering (°C) |
| | | | | CaO | Other than CaO | | | |
| ID01 | X | XXXXX | XXXX | XXXX | XXX | XXXX | XXXX | ○ |
| ID02 | X | XXXXX | XXXX | XXXX | XXX | XXXX | XXXX | △ |
| ID03 | X | XXXXX | XXXX | XXXX | XXX | XXXX | XXXX | □ |
| ID04 | X | XXXXX | XXXX | XXXX | XXX | XXXX | XXXX | ◇ |
| ID05 | X | XXXXX | XXXX | XXXX | XXX | XXXX | XXXX | ☆ |

FIG.13

Start

Acquire a plurality of pieces of training data | S6111

Create component-fluctuation prediction model | S6112

Store component-fluctuation prediction model | S6113

End

FIG.14

```
        ┌──────────┐
        │  Start   │
        └────┬─────┘
   ┌─────────┴──────────┐
   │ Acquire a plurality │  S6121
   │ of pieces of        │
   │ training data       │
   └─────────┬──────────┘
   ┌─────────┴──────────┐
   │ Create energization │  S6122
   │ heat-up             │
   │ prediction model    │
   └─────────┬──────────┘
   ┌─────────┴──────────┐
   │ Store energization  │  S6123
   │ heat-up             │
   │ prediction model    │
   └─────────┬──────────┘
        ┌────┴─────┐
        │   End    │
        └──────────┘
```

FIG.15

```
        ┌──────────────┐
        │    Start     │
        └──────┬───────┘
               │
   ┌───────────────────────────┐
   │ Acquire a plurality of    │ S6131
   │ pieces of training data   │
   └───────────┬───────────────┘
               │
   ┌───────────────────────────┐
   │ Create temperature-       │ S6132
   │ lowering prediction model │
   └───────────┬───────────────┘
               │
   ┌───────────────────────────┐
   │ Store temperature-        │ S6133
   │ lowering prediction model │
   └───────────┬───────────────┘
               │
        ┌──────────────┐
        │     End      │
        └──────────────┘
```

## FIG.16

```
                    ( Start )
                       |
┌──────────────────────────────────────────────┐
│ Input of setting information and initial       │  S000
│ component of molten steel                      │
└──────────────────────────────────────────────┘
                       |
┌──────────────────────────────────────────────┐
│ Calculation of temperature-rising value due   │  S100
│ to oxygen heat-up/first calculation            │
└──────────────────────────────────────────────┘
                       |
┌──────────────────────────────────────────────┐
│ Calculation related to slag-making agent       │  S200
│ addition/second calculation                    │
└──────────────────────────────────────────────┘
                       |
┌──────────────────────────────────────────────┐
│ Calculation related to component fluctuation   │  S300
│ of molten steel due to vacuum degassing        │
│ process/third calculation                      │
└──────────────────────────────────────────────┘
                       |
┌──────────────────────────────────────────────┐
│ Calculation related to weight of ferroalloy to │  S400
│ be added and number of times of addition       │
│ thereof/fourth calculation                     │
└──────────────────────────────────────────────┘
                       |
┌──────────────────────────────────────────────┐
│ Calculation related to addition of scrap/      │  S500
│ fifth calculation                              │
└──────────────────────────────────────────────┘
                       |
┌──────────────────────────────────────────────┐
│ Calculation related to energization heat-up    │  S600
│ that is performed to supplement lowering of    │
│ molten steel temperature due to addition of    │
│ ferroalloy and scrap/sixth calculation         │
└──────────────────────────────────────────────┘
                       |
┌──────────────────────────────────────────────┐
│ Calculation related to molten steel            │  S700
│ temperature that lowers in vacuum degassing    │
│ process/seventh calculation                    │
└──────────────────────────────────────────────┘
                       |
┌──────────────────────────────────────────────┐
│ Calculation related to energization heat-up    │  S800
│ that is performed with respect to temperature- │
│ lowered molten steel after vacuum degassing    │
│ process/eighth calculation                     │
└──────────────────────────────────────────────┘
                       |
                    ( End )
```

FIG.17

| | Initial Component (%) |
|---|---|
| C | XXXX |
| Si | XXXX |
| Mn | XXXX |
| S | XXXX |
| Cr | XXXX |
| Ni | XXXX |
| Mo | XXXX |
| V | XXXX |
| P | XXXX |
| Cu | XXXX |
| Sn | XXXX |
| Al | XXXX |

FIG.18

```
            ╭─────────────╮
            │    Start     │
            ╰──────┬──────╯
                   │
   ┌───────────────┴───────────────┐
   │  Calculate difference with target  │ S401
   │          component             │
   └───────────────┬───────────────┘
                   │
   ┌───────────────┴───────────────┐
   │  Calculate weight to be added for  │ S402
   │         each component         │
   └───────────────┬───────────────┘
                   │
   ┌───────────────┴───────────────┐
   │  Calculate ferroalloy weight to be │ S403
   │             added              │
   └───────────────┬───────────────┘
                   │
   ┌───────────────┴───────────────┐
   │  Calculate total addition weight for │ S404
   │       each of Groups 1 to 3    │
   └───────────────┬───────────────┘
                   │
   ┌───────────────┴───────────────┐
   │  Calculate number of times of  │ S405
   │     addition N of ferroalloy   │
   └───────────────┬───────────────┘
                   │
   ┌───────────────┴───────────────┐
   │  Calculate addition weight of  │ S406
   │    ferroalloy for each time    │
   └───────────────┬───────────────┘
                   │
            ╭──────┴──────╮
            │     End      │
            ╰─────────────╯
```

## FIG.19

| | Name | Addition Weight(kg) | | |
|---|---|---|---|---|
| | | Group 1 | Group 2 | Group 3 |
| C | Showkalizer | | | 38 |
| Si | Low-carbon Fe-Si | 220 | | |
| Mn | High-carbon Fe-Mn | | 200 | |
| Ni | Ni briquette | 400 | | |
| Cr | High-carbon Fe-Cr | | 1,500 | |
| | Low-carbon Fe-Cr | | 380 | |
| Mo | Fe-Mo | 120 | | |
| V | Fe-V | | | 100 |
| Subtotal (※) | | 740 | 2,080 | 100 |
| Total | | 2,920 | | |

(※) Showkalizer 38kg is summed to weight as 0kg owing to 0% of weight reflection rate (%) in FIG. 7

## FIG.20

Start

S501

Initial weight＋ferroalloy addition weight＜target weight ?

NO

YES

Calculate scrap addition weight — S502

Calculate number of times of scrap addition — S503

Calculate addition weight of scrap for each time — S504

End

# FIG.21

| Operation Name | Required Time (min.) * :Constant | | Operation Content | Molten Steel Weight (kg) | | | Molten Steel Temperature (°C) | | | Notes |
|---|---|---|---|---|---|---|---|---|---|---|
| | | | | Before operation | Weight increase | After operation | Before operation | Temperature variation | After operation | |
| Taking sample of molten steel and analyzing component | 0 | * | (Check of initial component) | 82,800 | 0 | 82,800 | 1,552 | ±0 | 1,552 | |
| Oxygen heat-up | 10 | * | Oxygen usage amount 100Nm$^3$ | 82,800 | 0 | 82,800 | 1,552 | +29 | 1,581 | |
| Slag-making agent addition | 2 | * | Addition of CaO etc. | 82,800 | 0 | 82,800 | 1,581 | ±0 | 1,581 | |
| Energization heat-up before scrap addition | — | — | — | — | — | — | — | — | — | In this embodiment, it is judged that scrap addition and energization heat-up before scrap addition are unnecessary |
| Scrap addition | — | — | — | — | — | — | — | — | — | |
| Energization heat-up | | | | | | | | | | |
| Ferroalloy addition at first time | 2 | * | Total 740kg | 82,800 | 740 | 83,540 | | -18 | | |
| Energization heat-up | | | | | | | | | | |
| Ferroalloy addition at second time | 2 | * | Total 2080kg | 83,540 | 2,080 | 85,620 | | -50 | | |
| Energization heat-up | | | | | | | | | | |
| Ferroalloy addition at third time | 2 | * | Total 100kg | 85,620 | 100 | 85,720 | | -2 | | |
| Energization heat-up | | | | | | | | | | |
| Vacuum degassing process | 20 | * | | | | | | | | |
| Energization heat-up | | | | | | | | | | |

# FIG.22

```
                    ┌──────────────┐
                    │    Start      │
                    └──────┬───────┘
                           │
         ┌─────────────────┴─────────────────┐
         │              i=1                   │ S601
         └─────────────────┬─────────────────┘
                           │◄──────────────┐
         ┌─────────────────┴─────────────────┐
         │ Calculate target temperature at each time, │ S602
         │ Target temperature after i-th addition=1581+(1600−1581)÷N×i │
         └─────────────────┬─────────────────┘
                           │
                        S603
              Judge necessity of
    energization before i-th ferroalloy addition, last     YES ─┐
    minute temperature − temperature lowering due               │
              to i-th addition                                   │
                  >1540 ?                                        │
                           │ NO                                  │
         ┌─────────────────┴─────────────────┐                  │
         │ Calculate energization heat-up by model 612, │ S604   │
         │      Start : current temperature             │        │
         │ Target temperature : 1540+temperature lowering due to addition │
         └─────────────────┬─────────────────┘                  │
                           │◄──────────────────────────────────┘
         ┌─────────────────┴─────────────────┐
         │ Calculate molten steel temperature due to i-th ferroalloy addition, │ S605
         │ Molten steel temperature (°C)=current temperature (°C) │
         │ −temperature lowering due to ferroalloy addition (°C) │
         └─────────────────┬─────────────────┘
                           │
                        S606
           Molten steel temperature
    −temperature lowering due to (i+1)-th      YES ─┐
         addition> (i+1)-th target                  │
            temperature ?                           │
                           │ NO                      │
                        S607                         │
            Target temperature                       │
    after i-th addition−temperature lowering due to  YES ──┐
           (i+1)-th addition                         │     │
                >1540 ?                               │     │
                           │ NO          S608         │     │
                                                      │   S609
         ┌─────────────────┴─────────────────┐    ┌──────────────┐
         │ Calculate energization heat-up by model 612, │ │ Calculate energization │
         │      Start : current temperature  │ S608 │ heat-up by model 612, │
         │ Target temperature : 1540+temperature lowering due to addition │ │ target temperature is │
         └─────────────────┬─────────────────┘    │ not changed   │
                           │◄─────────────────────┴──────────────┘
                        S610
      YES        ◄── i < N ?
         │                 │ NO
   ┌─────┴──────┐
   │  i=i+1     │ S611
   └─────┬──────┘
         │              ┌──────────────┐
         └──────────────│     End      │
                        └──────────────┘
```

# FIG.23

| Operation Name | Required Time (min.) * : Constant | | Operation Content | Molten Steel Weight (kg) | | | Molten Steel Temperature (°C) | | | Notes |
|---|---|---|---|---|---|---|---|---|---|---|
| | | | | Before operation | Weight increase | After operation | Before operation | Temperature variation | After operation | |
| Taking sample of molten steel and analyzing component | 0 | * | (Check of initial component) | 82,800 | 0 | 82,800 | 1,552 | ±0 | 1,552 | |
| Oxygen heat-up | 10 | * | Oxygen usage amount 100Nm$^3$ | 82,800 | 0 | 82,800 | 1,552 | +29 | 1,581 | |
| Slag-making agent addition | 2 | * | Addition of CaO etc. | 82,800 | 0 | 82,800 | 1,581 | ±0 | 1,581 | |
| Energization heat-up before scrap addition | — | — | — | — | — | — | — | — | — | In this embodiment, it is judged that scrap addition and energization heat-up before scrap addition are unnecessary |
| Scrap addition | — | — | — | — | — | — | — | — | — | |
| Energization heat-up | — | — | — | — | — | — | — | — | — | In this embodiment, it is judged that energization heat-up before ferroalloy addition at first time is unnecessary |
| Ferroalloy addition at first time | 2 | * | Total 740kg | 82,800 | 740 | 83,540 | 1,581 | -18 | 1,563 | |
| Energization heat-up | 50 | — | Heat-up to target temperature 1590°C | 83,540 | 0 | 83,540 | 1,563 | +30 | 1,593 | Overshoot 3°C |
| Ferroalloy addition at second time | 2 | * | Total 2080kg | 83,540 | 2,080 | 85,620 | 1,593 | -50 | 1,543 | |
| Energization heat-up | 30 | — | Heat-up to target temperature 1591°C | 85,620 | 0 | 85,620 | 1,543 | +51 | 1,594 | Overshoot 3°C |
| Ferroalloy addition at third time | 2 | * | Total 100kg | 85,620 | 100 | 85,720 | 1,594 | -2 | 1,592 | |
| Energization heat-up | 10 | — | Heat-up to target temperature 1600°C | 85,720 | 100 | 85,820 | 1,592 | +13 | 1,605 | Overshoot 5°C |
| Vacuum degassing process | 20 | * | | 85,820 | 0 | 85,820 | | | | |
| Energization heat-up | | | | 85,820 | 0 | 85,820 | | | | |

## FIG.24

| Operation Name | Required Time (min.) * : Constant | | Operation Content | Molten Steel Weight (kg) | | | Molten Steel Temperature (°C) | | | Notes |
|---|---|---|---|---|---|---|---|---|---|---|
| | | | | Before operation | Weight increase | After operation | Before operation | Temperature variation | After operation | |
| Taking sample of molten steel and analyzing component | 0 | * | (Check of initial component) | 82,800 | 0 | 82,800 | 1,552 | ±0 | 1,552 | |
| Oxygen heat-up | 10 | * | Oxygen usage amount 100Nm³ | 82,800 | 0 | 82,800 | 1,552 | +29 | 1,581 | |
| Slag-making agent addition | 2 | * | Addition of CaO etc. | 82,800 | 0 | 82,800 | 1,581 | ±0 | 1,581 | |
| Energization heat-up before scrap addition | — | — | — | — | — | — | — | — | — | In this embodiment, it is judged that scrap addition and energization heat-up before scrap addition are unnecessary |
| Scrap addition | — | — | — | — | — | — | — | — | — | |
| Energization heat-up | — | — | — | — | — | — | — | — | — | In this embodiment, it is judged that energization heat-up before ferroalloy addition at first time is unnecessary |
| Ferroalloy addition at first time | 2 | * | Total 740kg | 82,800 | 740 | 83,540 | 1,581 | -18 | 1,563 | |
| Energization heat-up | 50 | — | Heat-up to target temperature 1590°C | 83,540 | 0 | 83,540 | 1,563 | +30 | 1,593 | Overshoot 3°C |
| Ferroalloy addition at second time | 2 | * | Total 2080kg | 83,540 | 2,080 | 85,620 | 1,593 | -50 | 1,543 | |
| Energization heat-up | 30 | — | Heat-up to target temperature 1591°C | 85,620 | 0 | 85,620 | 1,543 | +51 | 1,594 | Overshoot 3°C |
| Ferroalloy addition at third time | 2 | * | Total 100kg | 85,620 | 100 | 85,720 | 1,594 | -2 | 1,592 | |
| Energization heat-up | 10 | — | Heat-up to target temperature 1600°C | 85,720 | 100 | 85,820 | 1,592 | +13 | 1,605 | Overshoot 5°C |
| Vacuum degassing process | 20 | * | — | 85,820 | 0 | 85,820 | 1,605 | -28 | 1,577 | |
| Energization heat-up | 50 | — | Heat-up to target temperature 1650°C | 85,820 | 0 | 85,820 | 1,577 | +70 | 1,647 | Calculations are performed in 5-minutes pitch, the result that the temperature most nearly to target temperature 1650°C is obtained is adopted |

EP 4 570 925 A1

Europäisches
Patentamt

European
Patent Office

Office européen
des brevets

# EUROPEAN SEARCH REPORT

**Application Number**

EP 24 21 9168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEWALD K E: "SUPERVISORY COMPUTER CONTROL FOR THE RH VACUUM DEGASSER", IRION AND STEEL ENGINEER, AISE, PITTSBURG, PA, US, vol. 68, no. 7, 1 July 1991 (1991-07-01), pages 25-32, XP000237909, ISSN: 0021-1559 * page 27 - page 31 * | 1-12 | INV. C21C7/00 C21C7/072 C21C7/10 |
| X | SZATKOWSKI M T ET AL: "RECENT ADVANCES IN VACUUM METALLURGY PROCESS CONTROL", IRION AND STEEL ENGINEER, AISE, PITTSBURG, PA, US, vol. 67, no. 7, 1 July 1990 (1990-07-01), pages 25-32, XP000151298, ISSN: 0021-1559 * page 25 - page 29 * | 1-12 | |
| X | BORUTTA D: "AUTOMATISIERTE PROZESSFUEHRUNG FUER PFANNENOFEN UND STANDENTGASUNG IN EINEM EDELSTAHLWERK", STAHL UND EISEN, MAENKEN KOMMUNIKATION GMBH, vol. 111, no. 5, 15 May 1991 (1991-05-15), pages 121-127, 169, XP000205486, ISSN: 0340-4803 * page 125 - page 127 * | 1-12 | **TECHNICAL FIELDS SEARCHED (IPC)** C21C |
| X | "TOP BLOWING IN THE RH FOR ULC STEELMAKING AT CHIBA WORKS", STEEL TIMES INTERNATIONAL, DMG WORLD MEDIA, LEWES, GB, vol. 15, no. 4, 1 July 1991 (1991-07-01), page 24, 26, XP000233287, ISSN: 0143-7798 * the whole document * | 1-12 | |

The present search report has been drawn up for all claims

| Place of search | Date of completion of the search | Examiner |
|---|---|---|
| The Hague | 17 April 2025 | Desvignes, Rémi |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7316628 A
- JP 9078122 A